(19) Europäisches Patentamt
European Patent Office
Office européen des brevets

(11) **EP 4 727 140 A1**

(12) **EUROPEAN PATENT APPLICATION**
published in accordance with Art. 153(4) EPC

(43) Date of publication:
**15.04.2026 Bulletin 2026/16**

(21) Application number: **24845738.4**

(22) Date of filing: **07.05.2024**

(51) International Patent Classification (IPC):
**H04N 21/4402** (2011.01)    **H04N 21/472** (2011.01)
**H04N 21/426** (2011.01)

(52) Cooperative Patent Classification (CPC):
**H04N 21/426; H04N 21/4402; H04N 21/472**

(86) International application number:
**PCT/KR2024/006101**

(87) International publication number:
**WO 2025/023434 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.07.2023 KR 20230095142**

(71) Applicant: **Samsung Electronics Co., Ltd.
Suwon-si, Gyeonggi-do 16677 (KR)**

(72) Inventors:
• **BANG, Jiyoung
  Suwon-si, Gyeonggi-do 16677 (KR)**

• **JEONG, Jaehyeon
  Suwon-si, Gyeonggi-do 16677 (KR)**
• **KIM, Hongseob
  Suwon-si, Gyeonggi-do 16677 (KR)**
• **WOO, Joohyun
  Suwon-si, Gyeonggi-do 16677 (KR)**
• **CHOI, Keunha
  Suwon-si, Gyeonggi-do 16677 (KR)**

(74) Representative: **HGF
HGF Limited
4th Floor, 1 City Square
Leeds LS1 2ES (GB)**

(54) **ELECTRONIC DEVICE AND VIDEO PROCESSING METHOD USING SAME**

(57) According to various embodiments of the present disclosure, an electronic device may comprise: a display; a memory for storing instructions; and a processor. According to one embodiment, when executed by the processor, the instructions enable the electronic device to: detect an input of requesting playback of a first time point of a video while playing back the video; identify, on the basis of a table related to frames of the video, the number of frames from the first time point to a second time point indicating the previous sync frame; calculate, on the basis of the identified number of frames and the maximum performance of a codec according to the resolution of the video, the time required for decoding; and decode the video on the basis of the maximum performance of the codec according to the resolution of the video and the frames from the first time point to the second time point if it is identified that the calculated time required for decoding is within a reference time. In addition to various embodiments disclosed in the present document, various other embodiments are possible.

FIG. 7

EP 4 727 140 A1

Processed by Luminess, 75001 PARIS (FR)

# EP 4 727 140 A1

**Description**

[Technical Field]

Various embodiments of the disclosure relate to an electronic device and a video processing method using the same.

[Background Art]

As various electronic devices, such as a smartphone, a tablet PC, a portable multimedia player (PMP), a personal digital assistant (PDA), a laptop personal computer (PC), and a wearable device, are supplied, interest in technologies for viewing and editing videos using various devices is growing.

When detecting an input to request playback of a specific time point of a video while playing the video, an electronic device may decode and output a frame (e.g., a sync frame) (or random access picture) of the specific time point to display the specific time point of the video. For example, the electronic device may decode and output the frame of the specific time point, based on codec information and resolution information about the video.

The above information is presented as background information only to assist with an understanding of the disclosure. No determination has been made, and no assertion is made, as to whether any of the above might be applicable as prior art with regard to the disclosure.

[Disclosure of Invention]

[Technical Problem]

When a frame at a specific time point of a video is not a sync frame, decoding needs to be performed sequentially from the previous sync frame of the specific time point, and thus time required for decoding may vary depending on an interval between the specific time point and the previous sync frame and a decoding speed. When the interval between sync frames long wide and the frame at the specific time point is far from a sync frame, decoding may take a long time, which may result in a delay in operation. Furthermore, when time required for decoding a video with a variable fps is calculated using only static information, such as average fps, a codec type, and/or resolution, accuracy may be reduced.

An electronic device according to an embodiment of the disclosure may calculate time required for decoding by using the number of frames from a first time point to a second time point indicating a previous sync frame identified based on a table related to frames of a video when an input to request playback of the first time point of the video is detected, and may decode the video when the calculated time required for decoding is within a reference time.

[Solution to Problem]

According to an embodiment of the disclosure, an electronic device may include a display, a memory storing instructions, and a processor. According to an embodiment, the instructions may, when executed by the processor, cause the electronic device to detect an input to request playback of a first time point of a video while playing the video. According to an embodiment, the instructions may, when executed by the processor, cause the electronic device to identify a number of frames from the first time point of the video to a second time point indicating a previous sync frame, based on a table related to frames of the video. According to an embodiment, the instructions may, when executed by the processor, cause the electronic device to calculate time required for decoding, based on maximum performance of a codec according to resolution of the video and the identified number of frames. According to an embodiment, the instructions may, when executed by the processor, cause the electronic device to decode the video, based on the maximum performance of the codec according to the resolution of the video and the frames from the first time point to the second time point when the calculated time required for decoding is within a reference time.

A video processing method of an electronic device according to an embodiment of the disclosure may include detecting an input to request playback of a first time point of a video while playing the video. According to an embodiment, the video processing method of the electronic device may include identifying a number of frames from the first time point to a second time point indicating a previous sync frame, based on a table related to frames of the video. According to an embodiment, the video processing method of the electronic device may include calculating time required for decoding, based on maximum performance of a codec according to resolution of the video and the identified number of frames. According to an embodiment, the video processing method of the electronic device may include decoding the video, based on the maximum performance of the codec according to the resolution of the video and the frames from the first time point to the second time point when the calculated time required for decoding is within a reference time.

According to an embodiment of the disclosure, a non-transitory computerreadable recording medium (or computer program product) storing one or more programs may be described. The one or more programs according to an embodiment may include an instruction, when executed by a processor of an electronic device, to detect an input to request playback of a first time point of a video while playing the video. The one or more programs according to an embodiment may include an instruction, when executed by the processor of the electronic device, to identify a number of frames from the first time point to a second time point indicating a previous sync frame, based on a table related to frames of the video. The one or more programs according to an embodiment may include an instruction, when executed by the processor of the electronic device, to calculate time required for decoding, based on maximum performance of a codec according to resolution of the video and the identified number of frames. The one or more programs according to an embodiment may include an instruction, when executed by the processor of the electronic device, to decode the video, based on the maximum performance of the codec according to the resolution of the video and the frames from the first time point to the second time point when the calculated time required for decoding is within a reference time.

[Advantageous Effects of Invention]

An electronic device according to an embodiment of the disclosure may accurately calculate time required for decoding by using the number of frames from a first time point to a second time point indicating a previous sync frame identified based on a table related to frames of the video and information related to the video, thereby providing quick output of a frame corresponding to the first time point. Further, the electronic device may accurately calculate time required for decoding by using not only static information (e.g., average fps, the type of a codec, and/or resolution) but also dynamic information, for example, a table related to frames of a video, when the video has variable fps.

An electronic device according to an embodiment of the disclosure is capable of accurately calculating time required for decoding to quickly determine whether it is possible to perform decoding within a reference time, thus reducing user waiting time for outputting a frame corresponding to a first time point.

[Brief Description of Drawings]

FIG. 1 is a block diagram of an electronic device in a network environment according to an embodiment of the disclosure.

FIG. 2 is a block diagram of an electronic device according to an embodiment of the disclosure.

FIG. 3 is a flowchart illustrating a method for obtaining a table related to frames of a video according to an embodiment of the disclosure.

FIG. 4 is a diagram illustrating information included in a header of a video according to an embodiment of the disclosure.

FIG. 5 is a diagram illustrating a method for updating a second table based on operation 320 of FIG. 3 according to an embodiment of the disclosure.

FIG. 6 illustrates a method for updating a second table based on operation 325 to operation 335 of FIG. 3 according to an embodiment of the disclosure.

FIG. 7 is a flowchart illustrating a video processing method of an electronic device according to an embodiment of the disclosure.

FIG. 8 is a flowchart illustrating a video processing method of an electronic device according to an embodiment of the disclosure.

FIG. 9 is a diagram illustrating weighting information configured for a video according to an embodiment of the disclosure.

FIG. 10 is a flowchart illustrating a method for configuring a reference time, based on weighting information about a video according to an embodiment of the disclosure.

FIG. 11 is a flowchart illustrating a video processing method of an electronic device according to an embodiment of the disclosure.

FIG. 12 is a flowchart illustrating a video processing method of an electronic device according to an embodiment of the disclosure.

[Mode for the Invention]

Hereinafter, embodiments of the disclosure will be described in detail with reference to the drawings to be easily implemented by those skilled in the art to which the disclosure belongs. However, the disclosure may be implemented in various different types and is not limited to the embodiments described herein. In connection with description of the drawings, the same or similar reference numerals may be used for the same or similar components. Further, in the drawings and related description, description for well-known functions and configurations may be omitted for clarity and simplicity.

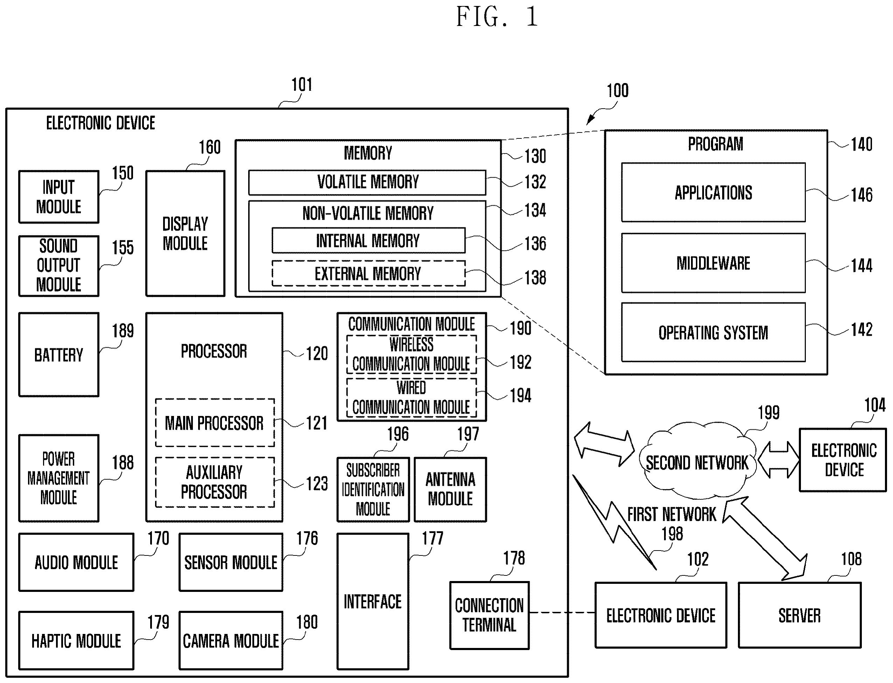

FIG. 1 is a block diagram illustrating an electronic device 101 in a network environment 100 according to various embodiments.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 and/or an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) (e.g., speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., through wires) or wirelessly. According to an embodiment, the interface 177 may include, for example, a high-definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., an application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, Wi-Fi direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultrareliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., an mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internetof-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

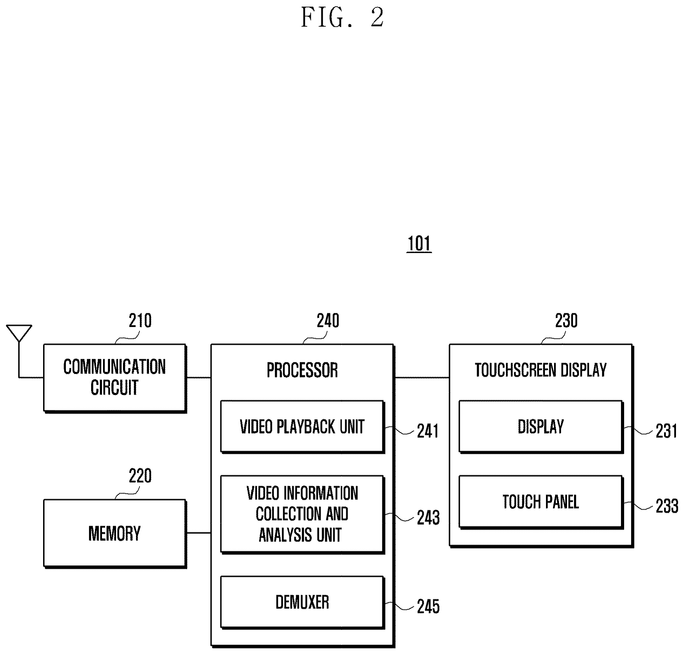

FIG. 2 is a block diagram illustrating an electronic device 101 according to an embodiment of the disclosure.

Referring to FIG. 2, the electronic device 101 (e.g., the electronic device 101 of FIG. 1) may include a communication circuit 210 (e.g., the communication module 190 of FIG. 1), a memory 220 (e.g., the memory 130 of FIG. 1), a touchscreen display 230 (e.g., the display module 160 of FIG. 1), and/or a processor 240 (e.g., the processor 120 of FIG. 1).

According to an embodiment of the disclosure, the communication circuit 210 (e.g., the communication module 190 of FIG. 1) may establish a communication channel with an external electronic device (e.g., the electronic device 102 of FIG. 1), and may support transmission and reception of various data with the external electronic device. For example, the communication circuit 210 may support establishment of a wireless communication channel with the external electronic device and performance of communication through the established communication channel.

According to an embodiment of the disclosure, the memory 220 (e.g., the memory 130 of FIG. 1) may function to store a program (e.g., the program 140 of FIG. 1) for processing and control of the processor 240 of the electronic device 101, an operating system (OS) (e.g., the operating system 142 of FIG. 1), various applications, and/or input/output data, and may store a program for controlling an overall operation of the electronic device 101. The memory 220 may store various instructions executable by the processor 240.

In an embodiment, the memory 220 may store instructions to calculate time required to decode frames from a first time point to a second time point under control of the processor 240 when an input to request playback of the first time point is detected while playing a video. The memory 220 may store instructions to determine whether to perform decoding under control of the processor 240, based on the calculated time required to decode the frame from the first time point to the second time point being identified as being within a reference time.

According to an embodiment of the disclosure, the touchscreen display 230 (e.g., the display module 160 of FIG. 1) may be configured in an integrated form including a display 231 and a touch panel 233, and may display a video under control of the processor 240.

In an embodiment, the display 231 may be configured as any one of a liquid crystal display (LCD), a light-emitting diode (LED) display, a micro-LED (μLED) display, an organic light-emitting diode (OLED) display, an active-matrix organic light-emitting diode (AMOLED) display, a microelectromechanical systems (MEMS) display, an electronic paper display, a flexible display, a foldable display, or a rollable display. However, the display 231 is not limited thereto.

In an embodiment, the touch panel 233 may be a composite touch panel including a hand touch panel that detects a hand gesture and a pen touch panel that detects a pen gesture.

In an embodiment, the touchscreen display 230 may output a video under control of the processor 240.

According to an embodiment of the disclosure, the processor 240 (e.g., the processor 120 of FIG. 1) may include, for example, a microcontroller unit (MCU) and may control a plurality of hardware components connected to the processor 240 by running an operating system (OS) or an embedded software program. For example, the processor 240 may control the plurality of hardware components according to instructions stored in the memory 220 (e.g., the program 140 of FIG. 1).

In various embodiments, the processor 240 may include at least one component (or module) for an operation according to an embodiment of the disclosure. For example, the processor 240 may include at least one functional unit, such as a video playback unit 241, a video information collection and analysis unit 243, and/or a demuxer 245. According to an embodiment, at least some of the functional units may be included as hardware modules (e.g., circuitry) in the processor 240 and/or configured as software including one or more instructions executable by the processor 240. For example, operations performed by the processor 240 may be executed by instructions that are stored in the memory 220 and cause the processor 240 to operate when executed.

In an embodiment, the video playback unit 241 may play a video, and may detect an input to request playback of a first time point of the video while playing the video. The video playback unit 241 may initialize (e.g., configure to a ready state) the video information collection and analysis unit 243 and the demuxer 245, based on playback of the video.

In an embodiment, the video information collection and analysis unit 243 may obtain pieces of information for calculating time required to decode frames from the first time point to a second time point or for adjusting a reference time for determining whether to perform decoding. For example, the pieces of information may include information related to the video (e.g., the resolution and frames per second (fps) of the video and/or the maximum performance fps of a codec per resolution), information about the number of frames from the first time point to the second time point indicating a previous sync frame, information related to the usage state of the codec, information about the read speed of the video, weighting information about each frame of the video, performance information about the processor 240, usage rate information about the processor 240, information about the remaining level of a battery (e.g., the battery 189 of FIG. 1), information related to whether a power saving mode operates, information about the temperature of the electronic device 101 (or temperature of the battery 189), and/or concentration information about a user.

In an embodiment, the processor 240 (e.g., the video playback unit 241) may configure the reference time related to required time according to a change of a playback point of a video when playing the video. For example, the reference time related to the required time according to the change of the video playback point may be time for determining whether to perform decoding based on frames from the first time point to the second time point indicating the previous sync frame when an input to request playback of the first time point different from a current playback point is detected while playing the video. The processor 240 (e.g., the video playback unit 241) may reset the video information collection and analysis unit (e.g., the video information collection and analysis unit 243) when playing the video. The reset video information collection and analysis unit 243 may obtain pieces of information (e.g., the resolution and frames per second (fps) of the video and/or the maximum performance fps of a codec per resolution) related to the video. The processor 240 (e.g., the video information collection and analysis unit 243) may identify whether a first table related to frames of the video exists in the demuxer 245. The demuxer 245 may obtain (read) first information indicating whether each of all frames of the video corresponds to a sync frame and second information indicating time information (e.g., a timestamp) about each frame among a plurality of pieces of information related to the video stored in a header of the video. The demuxer 245 may change each frame into a specific unit (e.g., millisecond), based on the obtained first information and second information. The demuxer 245 may indicate frames corresponding to sync frames as negative numbers (e.g., indicate the frames as negative time information) and frames not corresponding to sync frames as positive numbers (e.g., indicate the frames as positive time information) among the frames of the video, and may store the frames in the first table.

In an embodiment, when identifying that the first table related to the frames of the video exists in the demuxer 245, the processor 240 (e.g., the video information collection and analysis unit 243) may receive the first table from the demuxer 245 and update a second table. For example, the second table may include the time information about each frame of the video and information indicating an interval between frames (e.g., distance information or count information). The information indicating the interval between the frames may refer to information in which the frames corresponding to the sync frames among a plurality of frames are indicated as a first value (e.g., 0) and at least one frame (e.g., at least one frame that is not a sync frame) existing between sync frames is indicated as a second value (e.g., 1) to an nth value (e.g., n-1) by increasing the first value (e.g., 0) indicating the sync frames by a specified value (e.g., 1).

In an embodiment, when identifying that the first table related to the frames of the video does not exist in the demuxer 245, the processor 240 (e.g., the video information collection and analysis unit 243) may sequentially request and receive information about the frames of the video from the demuxer 245. The processor 240 (e.g., the video information collection and analysis unit 243) may update the second table, based on the information about the frames sequentially obtained from the demuxer 245.

In an embodiment, the processor 240 (e.g., the video playback unit 241) may detect an input to request playback of the first time point of the video while playing the video. Requesting the playback of the first time point of the video may mean decoding a frame corresponding to the first time point of which the playback is requested by a user and frames from the frame corresponding to the first time point to the previous sync frame and requesting output of frames from the decoded frame of the first time point. The processor 240 (e.g., the video information collection and analysis unit 243) may identify the number of frames from the first time point to the second time point indicating the previous sync frame, based on a table related to the frames of the video. The processor 240 (e.g., the video information collection and analysis unit 243) may calculate time required for decoding, based on the maximum performance of the codec according to the resolution of the video and the identified number of frames. When the calculated time required for decoding is identified as being within the reference time, the processor 240 may decode the video, based on the maximum performance of the codec according to the resolution of the video and the frames from the first time point to the second time point.

An electronic device 101 according to an embodiment of the disclosure may include a display 231, a memory 220 storing instructions, and a processor 240. The instructions according to an embodiment may, when executed by the processor 240, cause the electronic device 101 to detect an input to request playback of a first time point of a video while playing the video. The instructions according to an embodiment may, when executed by the processor 240, cause the electronic device 101 to identify a number of frames from the first time point of the video to a second time point indicating a previous sync frame, based on a table related to frames of the video. The instructions according to an embodiment may, when executed by the processor 240, cause the electronic device 101 to calculate time required for decoding, based on maximum performance of a codec according to resolution of the video and the number of frames from the first time point of the video to the second time point indicating the previous sync frame. The instructions according to an embodiment may, when executed by the processor 240, cause the electronic device 101 to decode the video, based on the maximum performance of the codec according to the resolution of the video and the frames from the first time point to the second time point when the calculated time required for decoding is identified as being within a reference time.

In an embodiment, the reference time may be time for determining whether to perform decoding based on the frames from the first time point to the second time point when the input to request the playback of the first time point is detected.

In an embodiment, the reference time may be time obtained from an application that plays the video or time configured by default.

The instructions according to an embodiment may, when executed by the processor 240, cause the electronic device 101 to identify whether there is the table related to the frames of the video while playing the video. The instructions according to an embodiment may, when executed by the processor 240, cause the electronic device 101 to obtain the table related to the frames of the video when there is the table related to the frames of the video.

The instructions according to an embodiment may, when executed by the processor 240, cause the electronic device 101 to generate the table related to the frames of the video when there is no table related to the frames of the video. The instructions according to an embodiment may, when executed by the processor 240, cause the electronic device 101 to sequentially obtain frame information about each of the frames of the video. The instructions according to an embodiment may, when executed by the processor 240, cause the electronic device 101 to update the generated table related to the frames of the video, based on the sequentially obtained frame information about each of the frames.

In an embodiment the sequentially obtained frame information about each of the frames may include information related to a sync frame and information indicating an interval between the sync frame and a non-sync frame.

The instructions according to an embodiment may, when executed by the processor 240, cause the electronic device 101 to decode a sync frame adjacent to the first time point when the calculated time required for decoding is identified as exceeding the reference time.

The instructions according to an embodiment may, when executed by the processor 240, cause the electronic device 101 to calculate the time required for decoding in further consideration of fps of the video.

The instructions according to an embodiment may, when executed by the processor 240, cause the electronic device 101 to obtain read speed information about the video while playing the video. The instructions according to an embodiment may, when executed by the processor 240, cause the electronic device 101 to calculate second time required for decoding, based on the obtained read speed information about the video and size of the frames from the first time point of the video to the second time point indicating the previous sync frame. The instructions according to an embodiment may, when executed by the processor 240, cause the electronic device 101 to decode the video, based on the maximum performance of the codec according to the resolution of the video and the frames from the first time point to the second time point when the calculated second time required for decoding is identified as being within the reference time.

The instructions according to an embodiment may, when executed by the processor 240, cause the electronic device 101 to identify weighting information about the frames of the video while playing the video. The instructions according to an embodiment may, when executed by the processor 240, cause the electronic device 101 to configure a second reference time related to decoding of the frames of the video, based on the identified weighting information about the frames of the video.

The instructions according to an embodiment may, when executed by the processor 240, cause the electronic device 101 to decode the video, based on the maximum performance of the codec according to the resolution of the video and the frames from the first time point to the second time point when the calculated time required for decoding is identified as being within the second reference time.

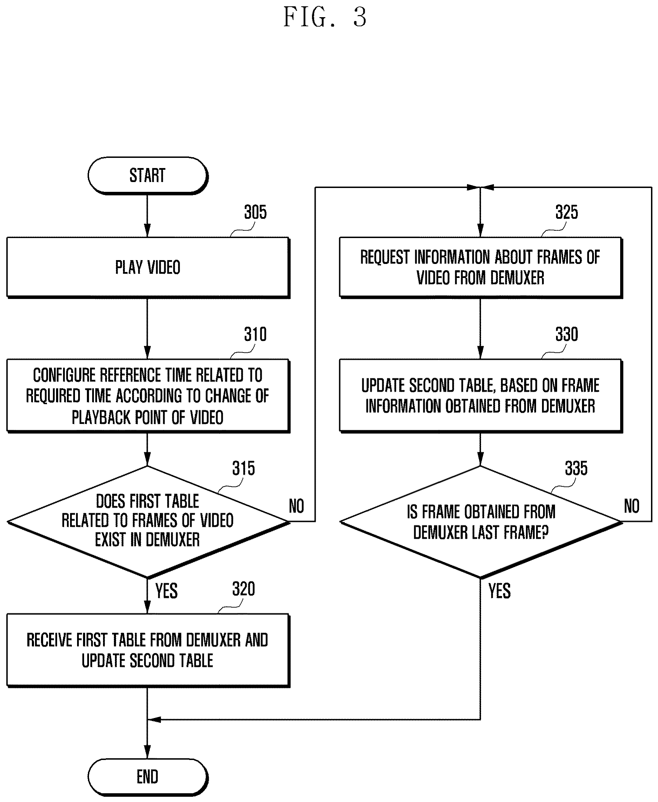

FIG. 3 is a flowchart illustrating a method for obtaining a table related to frames of a video according to an embodiment of the disclosure.

In the following embodiments, operations may be sequentially performed but are not necessarily sequentially performed. For example, the order of the operations may be changed, and at least two operations may be performed in parallel.

According to an embodiment, operation 305 to operation 335 may be construed as being performed by a processor (e.g., the processor 240 of FIG. 2) (e.g., the video playback unit 241 and/or the video information collection and analysis unit 243 of FIG. 2) of an electronic device (e.g., the electronic device 101 of FIG. 1).

Referring to FIG. 3, in operation 305, the processor 240 (e.g., the video playback unit 241 of FIG. 2) may play a video. In an embodiment, the video may be a video stored in a memory (e.g., the memory 220 of FIG. 2) of the electronic device 101, a video stored in an external storage device (e.g., an SD device), or a streaming video provided from an external electronic device or a server. However, the video is not limited thereto.

In an embodiment, in operation 310, the processor 240 (e.g., the video playback unit 241 of FIG. 2) may configure a reference time related to required time according to a change of a playback point of the video.

In an embodiment, the reference time related to the required time according to the change of the playback point of the video may be a time for determining whether to perform decoding, based on frames from a first time point to a second time point indicating a previous sync frame when an input to request playback of the first time point different from the current playback point is detected while playing the video.

In an embodiment, the processor 240 (e.g., the video playback unit 241 of FIG. 2) may obtain the reference time related to the required time according to the change of the playback point of the video from an application that plays the video. The disclosure is not limited thereto, and the processor 240 (e.g., the video playback unit 241 of FIG. 2) may use a reference time configured by default when failing to obtain the reference time related to the required time according to the change of the playback point of the video from the application that plays the video.

In an embodiment, the processor 240 (e.g., the video playback unit 241 of FIG. 2) may reset a video information collection and analysis unit (e.g., the video information collection and analysis unit 243 of FIG. 2) when playing the video. For example, an operation of resetting the video information collection and analysis unit 243 may be a preparation operation before obtaining pieces of information related to the video to determine time required to decode the video when the input to request the playback of the first time point is detected.

In an embodiment, the video information collection and analysis unit 243 may obtain information related to the video after being reset. For example, the information related to the video may include at least one of the resolution and frames per second (fps) of the video and the maximum performance fps of a codec per resolution. However, the information is not limited to the above example.

In an embodiment, in operation 315, the processor 240 (e.g., the video information collection and analysis unit 243) may identify whether a first table related to frames of the video exists in a demuxer (e.g., the demuxer 245 of FIG. 2).

In an embodiment, a plurality of pieces of information related to the video may be stored in a header of the video. The demuxer 245 may obtain (read) first information indicating whether each of all frames of the video corresponds to a sync frame and second information indicating time information (e.g., a timestamp) about each frame among the plurality of pieces of information related to the video stored in the header. For example, the demuxer 245 may obtain the first information indicating whether each of all frames of the video corresponds to the sync frame and/or the second information indicating the time information from the header of the video while the video information collection and analysis unit 243 is reset.

In an embodiment, the demuxer 245 may change the time information about each frame into a specific unit (e.g., millisecond), based on the obtained first information and second information. For example, when a time information expression range is changed to milliseconds to increase a time size, the amount of data expressible per unit time may increase. Accordingly, more data may be expressed for a specific time.

In an embodiment, the demuxer 245 may change the time information into the specific unit (e.g., millisecond), and may indicate frames corresponding to sync frames among the frames of the video as negative numbers (e.g., indicate the frames as negative time information) and frames not corresponding to sync frames among the frames of the video as positive numbers (e.g., indicate the frames as positive time information). The demuxer 245 may store time information in the specific unit in which the frames corresponding to the sync frames among the frames of the video are indicated as the negative numbers and time information in the specific unit in which the frames not corresponding to the sync frames among the frames of the video are indicated as the positive numbers in the first table.

In an embodiment, when identifying that the first table related to the frames of the video exists in the demuxer 245 (e.g., Yes in operation 315), the processor 240 (e.g., the video information collection and analysis unit 243) may receive the first table from the demuxer 245 and update a second table in operation 320. For example, the processor 240 (e.g., the video information collection and analysis unit 243) may generate the second table related to the frames of the video. When the first table related to the frames of the video exists in the demuxer 245, the processor 240 (e.g., the video information collection and analysis unit 243) may update the generated second table, based on the first table received from the demuxer 245.

In an embodiment, the second table may include the time information about each frame of the video and information (e.g., distance information or count information) indicating an interval between frames (e.g., an interval from a previous sync frame). The information indicating the interval between the frames may refer to information in information indicating the interval between the frames may refer to information in which the frames corresponding to the sync frames among the plurality of frames are indicated as a first value (e.g., 0) and at least one frame (e.g., at least one frame that is not a sync frame) existing between sync frames is indicated as a second value (e.g., 1) to an nth value (e.g., n-1) by increasing the first value (e.g., 0) indicating the sync frames by a specified value (e.g., 1). For example, in a description, there is a plurality of sync frames, for example, a first sync frame and a second sync frame, and three frames, for example, a (1-1)th frame, a (1-2)th frame, and a (1-3)th frame, exist between the first sync frame and the second sync frame. In this case, the processor 240 (e.g., the video information collection and analysis unit 243) may update the second table by indicating the first sync frame and the second sync frame as the first value (e.g., 0), indicating the (1-1)th frame existing between the first sync frame and the second sync frame as the second value (e.g., 1), indicating the (1-2)th frame as a third value (e.g., 2), and indicating the (1-3)th frame as a fourth value (e.g., 3).

In an embodiment, when identifying that the first table related to the frames of the video does not exist in the demuxer 245 (e.g., No in operation 315), the processor 240 (e.g., the video information collection and analysis unit 243) may request information about the frames of the video from the demuxer 245 in operation 325. For example, the processor 240 (e.g., the video information collection and analysis unit 243) may sequentially request information about each frame of the video from the demuxer 245. The demuxer 245 may sequentially forward the information about each frame of the video requested by the processor 240 (e.g., the video information collection and analysis unit 243) to the processor 240 (e.g., the video information collection and analysis unit 243). For example, the demuxer 245 may obtain (read) the first information indicating whether the frame of the video corresponds to the sync frame and the second information indicating the time information about the frame among the plurality of pieces of information related to the video stored in the header of the video, and may sequentially forward the first information and the second information to the processor 240 (e.g., the video information collection and analysis unit 243).

In an embodiment, the processor 240 (e.g., the video information collection and analysis unit 243) may update the second table, based on the information about the frame obtained from the demuxer 245 in operation 330. For example, the processor 240 (e.g., the video information collection and analysis unit 243) may update the second table by extracting the first information (e.g., the information indicating whether the frame of the video corresponds to the sync frame (e.g., true/false)) and the second information (e.g., the time information about the frame) from the information about each frame of the video sequentially obtained from the demuxer 245 and indicating the time information about each frame of the video and the information indicating the interval between the frames (e.g., the interval from the previous sync frame).

In an embodiment, the processor 240 (e.g., the video information collection and analysis unit 243) may terminate an operation of requesting the information about the frames of the video from the demuxer 245 and updating the second table when the information about the frame obtained from the demuxer 245 is identified as the last frame (end of a stream: EOS) (e.g., Yes in operation 335) in operation 335. For example, when the information about the frame obtained from the demuxer 245 is identified as the last frame (end of the stream: EOS), the processor 240 (e.g., the video information collection and analysis unit 243) may determine that the information about all frames of the video has been obtained, and may terminate the operation of requesting the information about the frames of the video from the demuxer 245 and updating the second table.

In an embodiment, when the information about the frame obtained from the demuxer 245 is not identified as the last frame (e.g., No in operation 335), the processor 240 (e.g., the video information collection and analysis unit 243) may go back to operation 325 and repeatedly perform the operation of requesting information about frames of the video from the demuxer 245 and updating the second table, based on the information about the frames obtained from the demuxer 245. In an embodiment, the operation of updating the second table may be performed asynchronously.

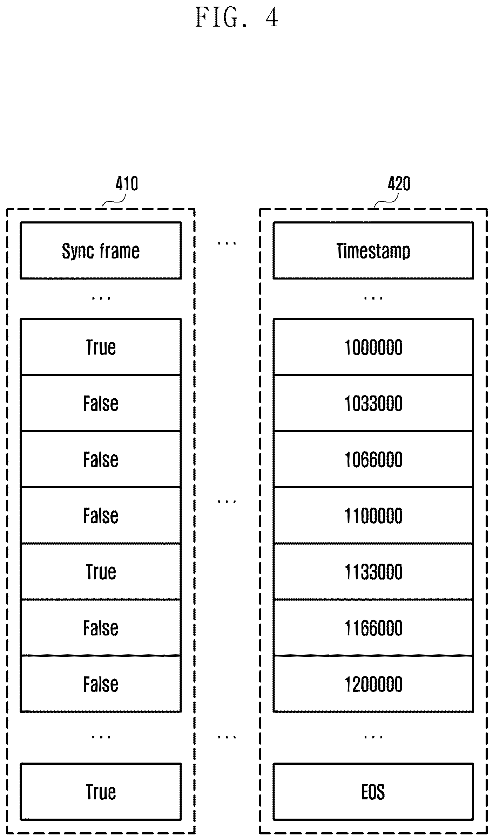

FIG. 4 is a diagram illustrating information included in a header of a video according to an embodiment of the disclosure.

Referring to FIG. 4, according to an embodiment, pieces of information related to a video may be stored in a header of the video. For example, the pieces of information related to the video stored in the header may include first information 410 indicating whether each of all frames of the video corresponds to a sync frame and second information 420 indicating time information (e.g., a timestamp) about each frame. In an embodiment, the first information 410 indicating whether each of all frames of the video corresponds to the sync frame may be configured to a first value (e.g., true) for frames corresponding to sync frames, and may be configured to a second value (e.g., false) for frames that do not correspond to sync frames. Texts such as true and false illustrated as examples of the first value and the second value are for illustration, and first value and the second value are not limited thereto. For example, the first value and the second value may be configured to various values, such as Boolean values (e.g., 0 and 1).

The pieces of information related to the video stored in the header according to an embodiment is not limited to the first information 410 and the second information 420 described above, and the pieces of information related to the video stored in the header may further include at least one of time when the video is generated, time when the video is edited, a location where the video is captured, and information about a device that has captured the video.

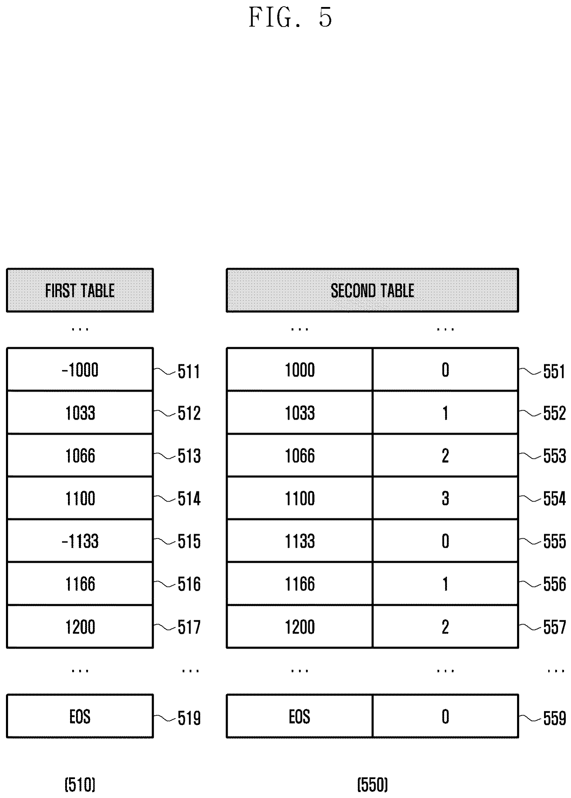

FIG. 5 is a diagram illustrating a method for updating a second table based on operation 320 of FIG. 3 according to an embodiment of the disclosure.

Reference numeral 510 of FIG. 5 according to various embodiments is a diagram illustrating a first table stored in a demuxer (e.g., the demuxer 245 of FIG. 2). Reference numeral 550 is a diagram illustrating a second table updated by a video information collection and analysis unit (e.g., the video collection and analysis unit 243 of FIG. 2) based on the first table.

Referring to reference numeral 510 according to an embodiment, the demuxer 245 may obtain first information (e.g., true and false) indicating whether each of all frames of a video corresponds to a sync frame and second information indicating time information (e.g., a timestamp) about each frame among a plurality of pieces of information related to the video stored in a header, and may change each frame into a specific unit (e.g., millisecond). For example, the demuxer 245 may change the time information into the specific unit (e.g., millisecond), and may indicate frames corresponding to sync frames among the frames of the video as negative time information 511 and 515 and frames not corresponding to sync frames among the frames of the video as positive time information 512, 513, 514, 516, and 517. The demuxer 245 may indicate the frames of the video as the negative time information 511 and 515 (e.g., the frames corresponding to the sync frames) and the positive time information 512, 513, 514, 516, and 517 (e.g., the frames not corresponding to the sync frames) and store the frames in the first table.

Referring to reference numeral 550 according to an embodiment, the video information collection and analysis unit 243 may obtain the first table from the demuxer 245 and update the second table. For example, the second table may include time information about each frame of the video and information indicating an interval between frames (e.g., distance information or count information). The video information collection and analysis unit 243 may obtain the first information 410 and the second information from the first table, and may update the second table by indicating a first sync frame 551, a second sync frame 555, and an nth sync frame 559 as a first value (e.g., 0), indicating a (1-1)th frame 552 existing between the first sync frame 551 and the second sync frame 555 as a second value (e.g., 1) (e.g., a value increased by a specified value (e.g., 1) from the first value (e.g., 0) indicating the first sync frame 551), indicating a (1-2)th frame 553 as a third value (e.g., 2) (e.g., a value increased by the specified value (e.g., 1) from the second value (e.g., 1) indicating the (1-1)th sync frame 552), and indicating a (1-3)th frame 554 as a fourth value (e.g., 3) (e.g., a value increased by the specified value (e.g., 1) from the third value (e.g., 2) indicating the (1-2)th sync frame 553) together with the time information about each frame of the video. A (2-1)th frame 556 and a (2-2)th frame 557 may also be indicated as the second value (e.g., 1) and the third value (e.g., 2) by the aforementioned method, thereby updating the second table.

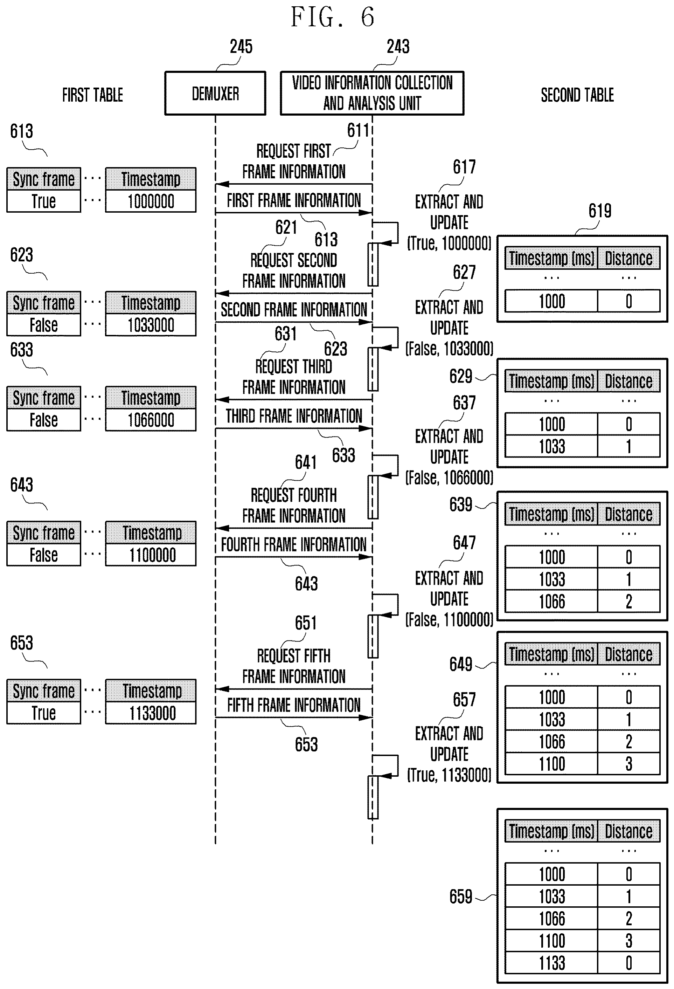

FIG. 6 illustrates a method for updating a second table based on operation 325 to operation 335 of FIG. 3 according to an embodiment of the disclosure.

In an embodiment, a processor (e.g., the processor 240 of FIG. 2), for example, a video information collection and analysis unit (e.g., the video information collection and analysis unit 243 of FIG. 2), may request pieces of information about frames of a video from a demuxer (e.g., the demuxer 245 of FIG. 2) when identifying that a first table related to the frames of the video does not exist in the demuxer 245.

Referring to FIG. 6, in operation 611, the video information collection and analysis unit 243 may request first frame information about the video from the demuxer 245. The demuxer 245 may obtain the first frame information 613 (e.g., sync frame: true, timestamp: 1000000) from a header of the video. In operation 615, the demuxer 245 may transmit the first frame information 613 (e.g., sync frame: true, timestamp: 1000000) to the video information collection and analysis unit 243. In operation 617, the video information collection and analysis unit 243 may extract information (e.g., true) indicating that a first frame is a sync frame and information (e.g., 1000000) indicating time information (timestamp) about the first frame, based on the first frame information 613 (e.g., sync frame: true, timestamp: 1000000) received (or obtained) from the demuxer 245, and may update (619) a second table, based on the extracted pieces of information (e.g., true and 1000000) about the first frame. The updated second table may include time information (e.g., 1000) about the first frame (e.g., time information obtained by changing the time information about the first frame into a specific unit (e.g., millisecond)) and distance information (e.g., 0, which indicates that the first frame is a sync frame) indicating an interval from the first frame, which is a sync frame.

In an embodiment, in operation 621, the video information collection and analysis unit 243 may request second frame information about the video from the demuxer 245. The demuxer 245 may obtain the second frame information 623 (e.g., sync frame: false, timestamp: 1033000) from the header of the video. In operation 625, the demuxer 245 may transmit the second frame information 623 (e.g., sync frame: false, timestamp: 1033000) to the video information collection and analysis unit 243. In operation 627, the video information collection and analysis unit 243 may extract information (e.g., false) indicating that a second frame is not a sync frame and information (e.g., 1033000) indicating time information about the second frame, based on the second frame information 623 (e.g., sync frame: false, timestamp: 1033000) received (or obtained) from the demuxer 245, and may update (629) the second table, based on the extracted pieces of information (e.g., false and 1033000) about the second frame. For example, the video information collection and analysis unit 243 may update (629) the second table by adding time information (e.g., 1033) about the second frame (e.g., time information obtained by changing the time information about the second frame into the specific unit (e.g., millisecond)) and distance information (e.g., 1) indicating an interval from the first frame, which is the sync frame, based on being a non-sync frame to the information about the first frame (time information: 1000, information (e.g., 0) indicating that the first frame is the sync frame).

In an embodiment, in operation 631, the video information collection and analysis unit 243 may request third frame information about the video from the demuxer 245. The demuxer 245 may obtain the third frame information 633 (e.g., sync frame: false, timestamp: 1066000) from the header of the video. In operation 635, the demuxer 245 may transmit the third frame information 633 (e.g., sync frame: false, timestamp: 1066000) to the video information collection and analysis unit 243. In operation 637, the video information collection and analysis unit 243 may extract information (e.g., false) indicating that a third frame is not a sync frame and information (e.g., 1066000) indicating time information about the third frame, based on the third frame information 633 (e.g., sync frame: false, timestamp: 1066000) received (or obtained) from the demuxer 245, and may update (639) the second table, based on the extracted pieces of information (e.g., false and 1066000) about the third frame. For example, the video information collection and analysis unit 243 may update (639) the second table by adding time information (e.g., 1066) about the third frame (e.g., time information obtained by changing the time information about the third frame into the specific unit (e.g., millisecond)) and distance information (e.g., 2) indicating an interval from the first frame, which is the sync frame, to the information about the first frame (time information: 1000, information (e.g., 0) indicating that the first frame is the sync frame) and the information about the second frame (time information: 1033, distance information (e.g., 1) indicating the interval from the first frame, which is the sync frame).

In an embodiment, in operation 641, the video information collection and analysis unit 243 may request fourth frame information about the video from the demuxer 245. The demuxer 245 may obtain the fourth frame information 643 (e.g., sync frame: false, timestamp: 1100000) from the header of the video. In operation 645, the demuxer 245 may transmit the fourth frame information 643 (e.g., sync frame: false, timestamp: 1100000) to the video information collection and analysis unit 243. In operation 647, the video information collection and analysis unit 243 may extract information (e.g., false) indicating that a fourth frame is not a sync frame and information (e.g., 1100000) indicating time information about the fourth frame, based on the fourth frame information 643 (e.g., sync frame: false, timestamp: 1100000) received (or obtained) from the demuxer 245, and may update (649) the second table, based on the extracted pieces of information (e.g., false and 1100000) about the fourth frame. For example, the video information collection and analysis unit 243 may update (649) the second table by adding time information (e.g., 1100) about the fourth frame (e.g., time information obtained by changing the time information about the fourth frame into the specific unit (e.g., millisecond)) and distance information (e.g., 3) indicating an interval from the first frame, which is the sync frame, to the information about the first frame (e.g., time information: 1000, information (e.g., 0) indicating that the first frame is the sync frame), the information about the second frame (e.g., time information: 1033, distance information (e.g., 1) indicating the interval from the first frame, which is the sync frame), and the information about the third frame (e.g., time information: 1066, distance information (e.g., 2) indicating the interval from the first frame, which is the sync frame).

In an embodiment, in operation 651, the video information collection and analysis unit 243 may request fifth frame information about the video from the demuxer 245. The demuxer 245 may obtain the fifth frame information 653 (e.g., sync frame: true, timestamp: 1133000) from the header of the video. In operation 655, the demuxer 245 may transmit the fifth frame information 653 (e.g., sync frame: true, timestamp: 1133000) to the video information collection and analysis unit 243. In operation 657, the video information collection and analysis unit 243 may extract information (e.g., true) indicating that a fifth frame is a sync frame and information (e.g., 1133000) indicating time information about the fifth frame, based on the fifth frame information 653 (e.g., sync frame: true, timestamp: 1133000) received (or obtained) from the demuxer 245, and may update (659) the second table, based on the extracted pieces of information (e.g., true and 1133000) about the fifth frame. For example, the video information collection and analysis unit 243 may update (659) the second table by adding time information (e.g., 1133) about the fifth frame (e.g., time information obtained by changing the time information about the fifth frame into the specific unit (e.g., millisecond)) and information (e.g., 0) indicating that the fifth frame is a sync frame to the information about the first frame (e.g., time information: 1000, information (e.g., 0) indicating that the first frame is the sync frame), the information about the second frame (e.g., time information: 1033, distance information (e.g., 1) indicating the interval from the first frame, which is the sync frame), the information about the third frame (e.g., time information: 1066, distance information (e.g., 2) indicating the interval from the first frame, which is the sync frame), and the information about the fourth frame (e.g., time information: 1100, distance information (e.g., 3) indicating the interval from the first frame, which is the sync frame).

The foregoing operations according to an embodiment may terminate when frame information obtained from the demuxer 245 is identified as a last frame (end of stream: EOS).

In FIG. 6 according to various embodiments, it is assumed that information about each frame of the video is sequentially requested from the demuxer 245, but the disclosure is not limited thereto.

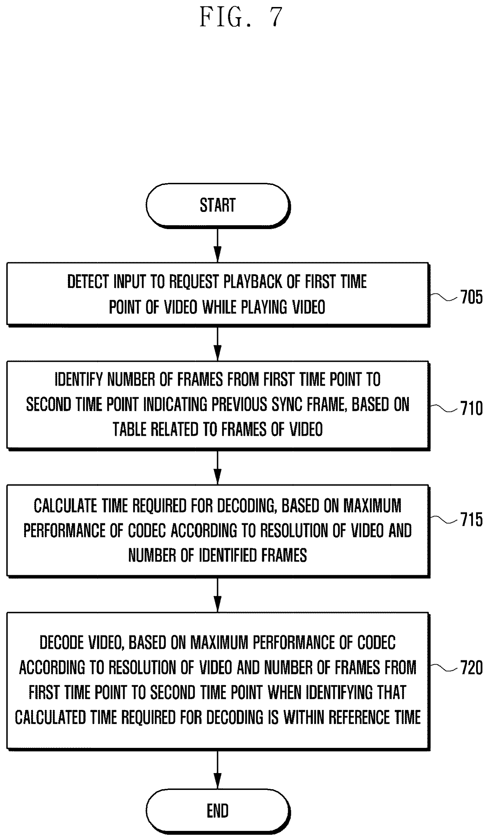

FIG. 7 is a flowchart illustrating a video processing method of an electronic device 101 according to an embodiment of the disclosure.

In the following embodiments, operations may be sequentially performed but are not necessarily sequentially performed. For example, the order of the operations may be changed, and at least two operations may be performed in parallel.

According to an embodiment, operation 705 to operation 720 may be construed as being performed by a processor (e.g., the processor 240 of FIG. 2) (e.g., the video playback unit 241 of FIG. 2 and/or the video information collection and analysis unit 243 of FIG. 2) of an electronic device (e.g., the electronic device 101 of FIG. 1).

Referring to FIG. 7, in operation 705, the processor 240 (e.g., the video playback unit 241) may detect an input to request playback of a first time point of a video while playing the video.

In an embodiment, the input to request the playback of the first time point of the video may include an input to request playback of the first time point (e.g., a playback point before or after a current playback point) while displaying the played video on a display (e.g., the display 231 of FIG. 2). However, the input to request the playback of the first time point of the video is not limited thereto, and may include an input to request playback of the video through a second application (e.g., a video playback application) while a preview of the video is displayed through a first application (e.g., a photo application). Further, the input to request the playback of the first time point of the video may include an input to request output of the video (e.g., video data and audio data) through the second application (e.g., the video playback application) while the audio data of the video is output (e.g., the audio data is output in the background), but is not limited thereto.

In an embodiment, requesting the playback of the first time point of the video may mean requesting output from a frame corresponding to the first time point of which the playback is requested by a user.

In an embodiment, in operation 710, the processor 240 (e.g., the video information collection and analysis unit 243) may identify the number of frames from the first time point to a second time point indicating a previous sync frame, based on a table related to frames of the video. For example, the processor 240 (e.g., the video information collection and analysis unit 243) may identify the number of frames from the first time point to the second time point indicating the previous sync frame, based on the second table illustrated in reference numeral 550 of FIG. 5 or the second table illustrated in FIG. 6.

For example, referring to the second table illustrated in reference numeral 550 of FIG. 5, when the input to request the playback of the first time point, for example, the first time point corresponding to "1100," of the video is detected, the processor 240 (e.g., the video information collection and analysis unit 243) may identify that the number of frames from the first time point (e.g., time information of "1100") to the second time point (e.g., time information of "1000") indicating the previous sync frame is four.

In an embodiment, in operation 715, the processor 240 (e.g., the video information collection and analysis unit 243) may calculate time required for decoding, based on the maximum performance of a codec according to the resolution of the video and the number of identified frames. The disclosure is not limited thereto, and the processor 240 (e.g., the video information collection and analysis unit 243) may also calculate time required for decoding in further consideration of the fps of the video.

An example of calculating the time required for decoding according to an embodiment is described assuming that the maximum performance fps of the codec according to the resolution of the video is 300 fps and the number of frames from the first time point to the second time point indicating the previous sync frame is 30. The processor 240 (e.g., the video information collection and analysis unit 243) may calculate the time required for decoding, based on 300 fps (e.g., the maximum performance fps of the codec) and 30 frames (e.g., frames from the first time point to the second time point). For example, the processor 240 (e.g., the video information collection and analysis unit 243) may calculate the time required for decoding as a value of 30 frames divided by 300 fps (e.g., 30/300 fps = 0.1 second).

In an embodiment, when identifying that the calculated time required for decoding is within a reference time, the processor 240 may decode the video, based on the maximum performance of the codec according to the resolution of the video and the number of frames from the first time point to the second time point in operation 720.

In an embodiment, the reference time may be time for determining whether to perform decoding based on the frames from the first time point to the second time point indicating the previous sync frame when the input to request the playback of the first time point is detected as in operation 705.

In an embodiment, assuming that the reference time is approximately 1 second, as the time required for decoding (e.g., 0.1 second) calculated in operation 715 is identified as being within the reference time (e.g., 1 second), the processor 240 may decode the video, based on 300 fps (e.g., the maximum performance fps of the codec) and 30 frames (e.g., frames from the first time point to the second time point). The processor 240 may display a decoded video of the first time point on the display 231.

In various embodiments, although not shown, when identifying that the calculated time required for decoding exceeds the reference time, the processor 240 may determine that it is impossible to decode a video of a period from the first time point to the second time point.

An example is described assuming that the maximum performance fps of the codec according to the resolution of the video is 60 fps and the number of frames from the first time point to the second time point indicating the previous sync frame is 100. The processor 240 may calculate the time required for decoding, based on 60 fps (e.g., the maximum performance fps of the codec) and 100 frames (e.g., frames from the first time point to the second time point). For example, the processor 240 may calculate the time required for decoding as a value of 100 frames divided by 60 fps (e.g., 100/60 fps = approximately 1.67 seconds). When identifying that the time required for decoding (e.g., approximately 1.67 seconds) exceeds the reference time (e.g., 1 second), the processor 240 may determine that it is impossible to decode the video of the period from the first time point to the second time point. In this case, the processor 240 may display (or play or output) a video of a sync frame adjacent to the frame corresponding to the first time point of which the playback is requested.

In an embodiment, although not shown, the table related to the frames of the video (e.g., the second table illustrated in reference numeral 550 of FIG. 5 or the second table illustrated in FIG. 6) may not include information about the number of frames from the first time point to the second time point indicating the previous sync frame. For example, when the playback of the first time point that is not included in the second table is requested while the second table is updated, the second table may not include the information about the number of frames from the first time point to the second time point indicating the previous sync frame. In this case, the processor 240 may determine that it is impossible to decode the video corresponding to the period from the first time point to the second time point.

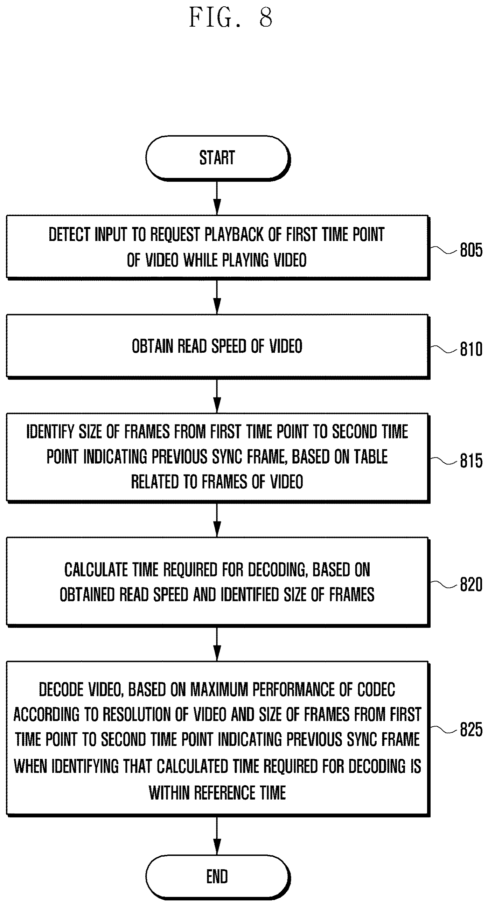

Although FIG. 7 according to various embodiments shows that the time required to decode the frames from the first time point to the second time point is calculated based on the maximum performance of the codec according to the resolution of the video and the number of frames from the first time point to the second time point, the disclosure is not limited thereto. For example, the processor 240 may also calculate the time required to decode the frames from the first time point to the second time point, based on the read speed of the video and the size of the frames from the first time point to the second time point. Various relevant embodiments will be described below with reference to FIG. 8.

FIG. 8 is a flowchart illustrating a video processing method of an electronic device 101 according to an embodiment of the disclosure.

In the following embodiments, operations may be sequentially performed but are not necessarily sequentially performed. For example, the order of the operations may be changed, and at least two operations may be performed in parallel.

According to an embodiment, operation 805 to operation 825 may be construed as being performed by a processor (e.g., the processor 240 of FIG. 2) (e.g., the video playback unit 241 of FIG. 2 and/or the video information collection and analysis unit 243 of FIG. 2) of an electronic device (e.g., the electronic device 101 of FIG. 1).

Referring to FIG. 8, in operation 805, the processor 240 (e.g., the video playback unit 241) may detect an input to request playback of a first time point of a video while playing the video. For example, the input to request the playback of the first time point of the video may include an input to request playback of the first time point (e.g., a playback point before or after a current playback point) while displaying the played video on a display (e.g., the display 231 of FIG. 2), an input to request playback of the video through a second application (e.g., a video playback application) while a preview of the video is displayed through a first application (e.g., a photo application), or an input to request output of the video (e.g., video data and audio data) through the second application (e.g., the video playback application) while the audio data of the video is output (e.g., the audio data is output in the background).

In an embodiment, in operation 810, the processor 240 (e.g., the video information collection and analysis unit 243) may obtain the read speed of the video. For example, when streaming the video, the processor 240 (e.g., the video information collection and analysis unit 243) may obtain the read speed of the video corresponding to a network transmission speed based on a network condition from a communication circuit (e.g., the communication circuit 210 of FIG. 2). In another example, when playing the video stored in an external storage device (e.g., an SD card), the processor 240 (e.g., the video information collection and analysis unit 243) may obtain the read speed of the video from the external storage device.

In an embodiment, in operation 815, the processor 240 (e.g., the video information collection and analysis unit 243) may identify the size of frames from the first time point to a second time point indicating a previous sync frame, based on a table related to frames of the video. For example, the processor 240 (e.g., the video information collection and analysis unit 243) may identify the number of frames from the first time point to the second time point indicating the previous sync frame, based on the second table illustrated in reference numeral 550 of FIG. 5 or the second table illustrated in FIG. 6. The processor 240 (e.g., the video information collection and analysis unit 243) may identify the size of the frames from the first time point to the second time point indicating the previous sync frame, based on the number of frames from the first time point to the second time point indicating the previous sync frame.

In an embodiment, in operation 820, the processor 240 (e.g., the video information collection and analysis unit 243) may calculate time required for decoding, based on the obtained read speed of the video and the identified size of the frames.

An example of calculating the time required for decoding according to an embodiment is described assuming that the read speed of the video is 312 Mbps and the size of the frames from the first time point to the second time point indicating the previous sync frame is 100 Mb. The processor 240 (e.g., the video information collection and analysis unit 243) may calculate the time required for decoding, based on 312 Mbps (e.g., the read speed of the video) and 100 Mb (e.g., the size of the frames from the first time point to the second time point). For example, the processor 240 (e.g., the video information collection and analysis unit 243) may calculate the time required for decoding as a value of the size of the frames, which is 100 Mb, divided by the read speed of the video, which is 312 Mbps (e.g., 100 Mb/312 Mbps = approximately 0.32 seconds).

In an embodiment, when identifying that the calculated time required for decoding is within a reference time, the processor 240 may decode the video, based on the maximum performance of a codec according to the resolution of the video and the frames from the first time point to the second time point indicating the previous sync frame in operation 825.

In an embodiment, the reference time may be time for determining whether to perform decoding based on the frames from the first time point to the second time point indicating the previous sync frame when the input to request the playback of the first time point is detected as in operation 805.

In an embodiment, assuming that the reference time is approximately 1 second, as the time required for decoding (e.g., approximately 0.32 second) calculated in operation 820 is identified as being within the reference time (e.g., 1 second), the processor 240 may decode the video, based on the maximum performance of the codec according to the resolution of the video and the frames from the first time point to the second time point indicating the previous sync frame. The processor 240 may display a decoded video of the first time point on the display 231.

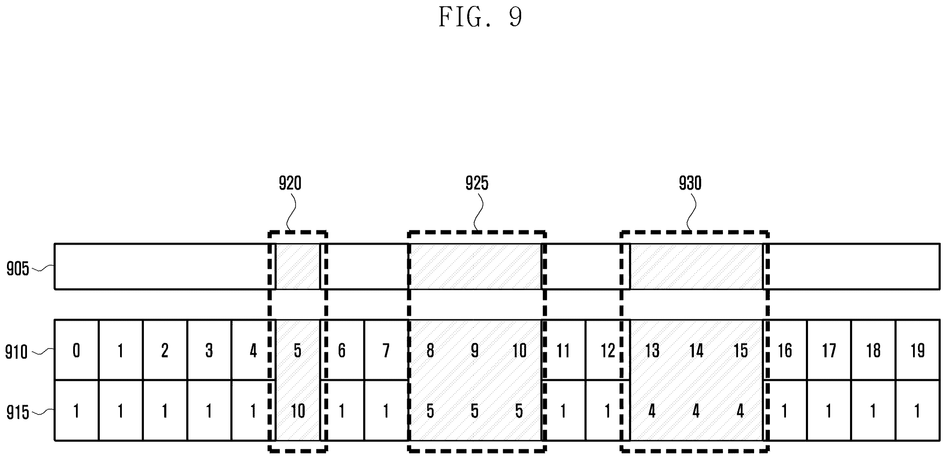

FIG. 9 is a diagram illustrating weighting information configured for a video according to an embodiment of the disclosure.

Referring to FIG. 9, a processor (e.g., the processor 240 of FIG. 2) may further include a video weighting information management unit. The video weighting information management unit may manage (or store) weighting information about frames of the currently played video.

In an embodiment, a frame configured as weighting information among the frames of the video may include at least one frame corresponding to a time point configured as a bookmark by a user, frames corresponding to a slow playback period, and/or at least one frame determined as a key scene based on video analysis, but is not limited thereto.

In an embodiment, the video weighting information management unit may map a frame number 910 of a video 905 and a weight value 915, and may store (or manage) the same as weighting information. For example, the video weighting information management unit may map a frame number 910 of the video 905 of 5 and a weight value 915 of 10, and may store the same as first weighting information 920 about the video 905. The video weighting information management unit may map frame numbers 910 of the video 905 of 8 to 10 and a weight value 915 of 5, and may store the same as second weighting information 925. Frame numbers 910 of the video 905 of 13 to 15 and a weight value 915 of 4 may be mapped and stored as third weighting information 930. The frame numbers 910 of the video 905 and the weight values 915 stored as the first weighting information 920, the second weighting information 925, and the third weighting information 930 described above are only examples for easy explanation, and are not limited thereto.

In an embodiment, when receiving a request for video weighting information from a video information collection and analysis unit (e.g., the video information collection and analysis unit 243 of FIG. 2), the video weighting information management unit may transmit weighting information about the frames (e.g., frame numbers 1 to 19) of the video to the video information collection and analysis unit 243. For example, the video weighting information management unit may transmit the weighting information about the frames (e.g., frame numbers 1 to 19) of the video in the form of a table to the video information collection and analysis unit 243. The disclosure is not limited thereto, and the video weighting information management unit may transmit only weighting information about specific frames (e.g., frame numbers 5, 8 to 10, and 13 to 15) for which weighting information is configured among the frames of the video to the video information collection and analysis unit 243. Alternatively, the video weighting information management unit may transmit only weighting information about a frame corresponding to a first time point according to a request from the video information collection and analysis unit 243.

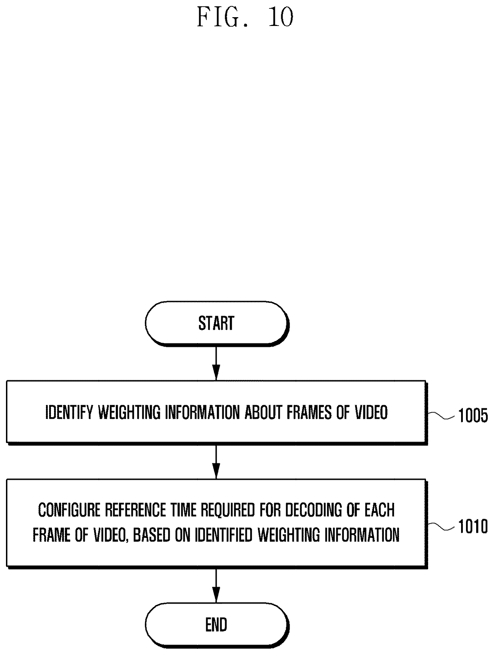

FIG. 10 is a flowchart illustrating a method for configuring a reference time, based on weighting information about a video according to an embodiment of the disclosure.

In the following embodiments, operations may be sequentially performed but are not necessarily sequentially performed. For example, the order of the operations may be changed, and at least two operations may be performed in parallel.

According to an embodiment, operation 1005 and operation 1010 may be construed as being performed by a processor (e.g., the processor 240 of FIG. 2) of an electronic device (e.g., the electronic device 101 of FIG. 1).

Referring to FIG. 10, in operation 1005, the processor 240 may identify weighting information about frames of a video. For example, the processor 240 may further include a video weighting information management unit that manages (or stores) weighting information about frames of a currently played video. The processor 240 (e.g., the video information collection and analysis unit 243 of FIG. 2) may receive (or obtain) the weighting information about frames (e.g., frame numbers 1 to 19 of FIG. 9) of the video in the form of a table from the video weighting information management unit, or may receive (or obtain) only weighting information about specific frames (e.g., frame numbers 5, 8 to 10, and 13 to 15 of FIG. 9) for which weighting information is configured. The disclosure is not limited thereto, and the processor 240 (e.g., the video information collection and analysis unit 243 of FIG. 2) may request weighting information about a frame corresponding to a first time point from the video weighting information management unit. In this case, the processor 240 (e.g., the video information collection and analysis unit 243 of FIG. 2) may receive (or obtain) only the weighting information about the frame (e.g., frame number 8 of FIG. 9 when frame number 8 corresponds to the first time point) corresponding to the first time point from the video weighting information management unit.

In an embodiment, in operation 1010, the processor 240 may configure a reference time related to decoding of each frame of the video, based on the identified weighting information.

In an embodiment, the reference time related to the decoding of each frame of the video may be changed or maintained according to weighting information about each frame of the video.

In an embodiment, the processor 240 may determine a case where a weight value for a frame exceeds a first weight value (e.g., 7) as a first state (e.g., high priority), determine a case where a weight value for a frame exceeds a second weight value (e.g., 3) as a second state (e.g., medium priority), and determine a case where a weight value for a frame is less than or equal to the second weight value as a third state (e.g., low priority).

In an embodiment, the processor 240 may configure a reference time for each frame of the video by multiplying a weight ratio value configured for a determined state by "1 second" configured as a reference time. For example, the following examples are described assuming that a weight ratio value configured for the first state (e.g., high priority) is "5," a weight ratio value configured for the second state (e.g., medium priority) is "3," and a weight ratio value configured for the third state (e.g., low priority) is "1."

For example, as shown in FIG. 9, a reference time for a frame (e.g., the frame number 910 of 5) of the video 905 having a weight value 915 of 10 as the first weighting information 920 may be changed from 1 second to 5 seconds (e.g., 1 second x 5.0 = 5 seconds). In another example, a reference time for a frame (e.g., the frame numbers 910 of 8 to 10) of the video 905 having a weight value 915 of 5 as the second weighting information 925 may be changed from 1 second to 3 seconds (e.g., 1 second x 3.0 = 3 seconds). In still another example, a reference time for a frame (e.g., frame numbers 910 of 13 to 15) of the video 905 having a weight value 915 of 4 as the third weighting information 925 may be changed from 1 second to 4 seconds (e.g., 1 second x 3.0 = 4 seconds). In yet another example, a reference time for a frame (e.g., frame numbers 910 of 0 to 4, 6, 7, 11, 12, and 16 to 19) of the video 905 having a weight value 915 of 1 other than the foregoing frames may be maintained to be 1 second (e.g., 1 second x 1.0 = 1 second).

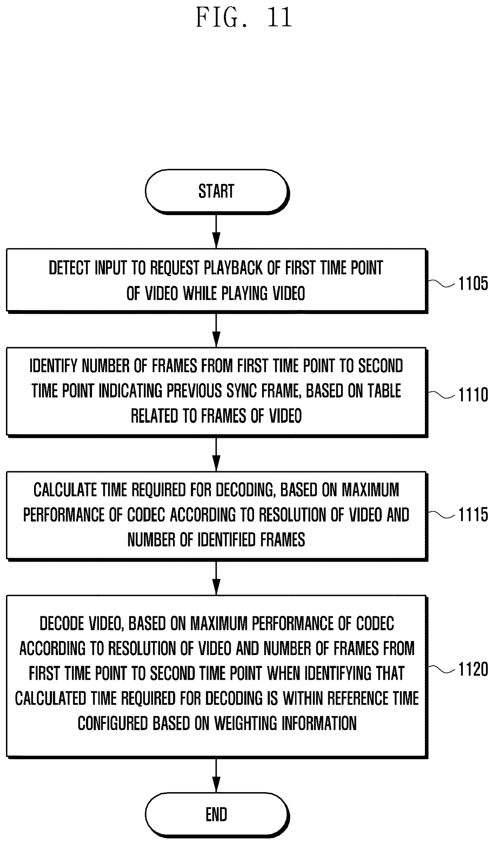

FIG. 11 is a flowchart illustrating a video processing method of an electronic device 101 according to an embodiment of the disclosure.

In the following embodiments, operations may be sequentially performed but are not necessarily sequentially performed. For example, the order of the operations may be changed, and at least two operations may be performed in parallel.

According to an embodiment, operation 1105 and operation 1120 may be construed as being performed by a processor (e.g., the processor 240 of FIG. 2) of an electronic device (e.g., the electronic device 101 of FIG. 1).

Operation 1105 to operation 1115 of FIG. 11 according to various embodiments are substantially the same as operation 705 to operation 715 of FIG. 7 described above, and thus a detailed description thereof may be replaced with a description of FIG. 7.

Referring to FIG. 11, in operation 1105, the processor 240 may detect an input to request playback of a first time point of a video while playing the video. In operation 1110, the processor 240 may identify the number of frames from the first time point to a second time point indicating a previous sync frame, based on a table related to frames of the video. In operation 1115, the processor 240 may calculate time required for decoding, based on the maximum performance of a codec according to the resolution of the video and the identified number of frames.

**EP 4 727 140 A1**

In an embodiment, in operation 1120, when the calculated time required for decoding is identified as being within a reference time configured based on weighting information, the processor 240 may decode the video, based on the maximum performance of the codec according to the resolution of the video and the frames from the first time point to the second time point.

An example is described assuming that the maximum performance fps of the codec according to the resolution of the video is 60 fps, the number of frames from the first time point to the second time point indicating the previous sync frame is 100, a reference time related to the required time according to a change of a playback point of the video is 1 second, and the reference time configured based on the weighting information is 3 seconds (e.g., 1 second x 3.0 = 3 seconds) since a weight value for the frames from the first time point to the second time point is configured to 3. The processor 240 may calculate the time required for decoding based on 60 fps (e.g., the maximum performance fps of the codec) and the 100 frames (e.g., the frames from the first time point to the second time point). For example, the processor 240 may calculate the time required for decoding as a value of 100 frames divided by 60 fps (e.g., 100/60 fps = approximately 1.67 seconds). When identifying that the time required for decoding (e.g., approximately 1.67 seconds) is less than the reference time (e.g., 3 seconds) configured based on the weighting information, the processor 240 may decode and display the video on a display (e.g., the display 231 of FIG. 2), based on 60 fps (e.g., the maximum performance of the codec) and the 100 frames (e.g., the frames from the first time point to the second time point).

In FIG. 9 to FIG. 11 according to various embodiments, the reference time for determining whether to perform decoding based on the frames from the first time point to the second time point indicating the previous sync frame may be adjusted based on weighting information about at least one frame configured for the video, and thus there may be a high probability of performing decoding of, for example, a frame period having large weighting information. Accordingly, the electronic device 101 may provide a video of a user's desired time point to be accurately played.

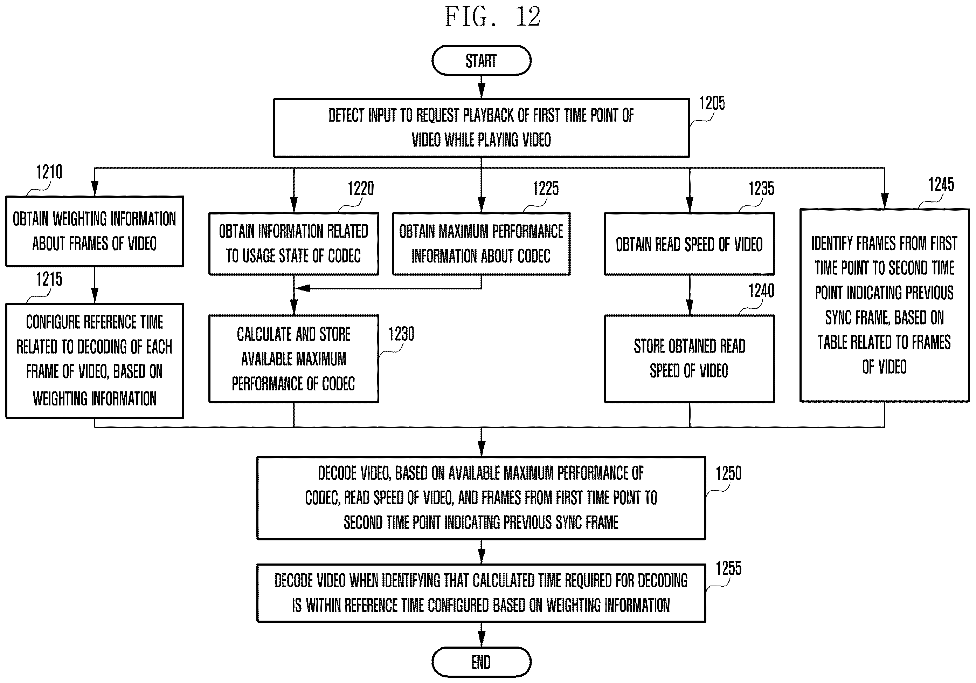

Although the time required to decode the frames from the first time point to the second time point has been described as being calculated based on the maximum performance of the codec according to the resolution of the video and the number of frames from the first time point of which the playback is requested to the second time point indicating the previous sync frame in FIG. 7 according to various embodiments, and based on the read speed of the video in FIG. 8 and whether to decode the frames from the first time point to the second time point has been described as being determined based on the reference time configured based on the weighting information, the disclosure is not limited thereto. For example, the processor 240 may calculate the time required to decode the frames from the first time point to the second time point considering all of the maximum performance of the codec according to the resolution of the video, the number of frames from the first time point to the second time point indicating the previous sync frame, information related to the usage state of the codec, the read speed of the video, and the weighting information, and determine whether to perform decoding. Various relevant embodiments will be described below with reference to FIG. 12.

FIG. 12 is a flowchart illustrating a video processing method of an electronic device 101 according to an embodiment of the disclosure.

In the following embodiments, operations may be sequentially performed but are not necessarily sequentially performed. For example, the order of the operations may be changed, and at least two operations may be performed in parallel.

According to an embodiment, operation 1205 and operation 1255 may be construed as being performed by a processor (e.g., the processor 240 of FIG. 2) (e.g., the video information collection and analysis unit 243 of FIG. 2) of an electronic device (e.g., the electronic device 101 of FIG. 1).

Referring to FIG. 12, in operation 1205, the processor 240 may detect an input to request playback of a first time point of a video while playing the video. For example, the input to request the playback of the first time point of the video may include an input to request playback of the first time point (e.g., a playback point before or after a current playback point) while displaying the played video on a display (e.g., the display 231 of FIG. 2), an input to request playback of the video through a second application (e.g., a video playback application) while a preview of the video is displayed through a first application (e.g., a photo application), or an input to request output of the video (e.g., video data and audio data) through the second application (e.g., the video playback application) while the audio data of the video is output (e.g., the audio data is output in the background).

In an embodiment, in operation 1210, the processor 240 may obtain weighting information about frames of the video. In operation 1215, the processor 240 may configure a reference time related to decoding of each frame of the video, based on the weighting information.

For example, as described above with reference to FIG. 10, the processor 240 (e.g., the video information collection and analysis unit 243 of FIG. 2) may configure the reference time related to the decoding of each frame of the video, based on the weighting information about the frames of the video obtained from a video weighting information management unit (not shown). For example, the video weighting information management unit may map a frame number of the video and a weight value, and may store (or manage) the same as weighting information. The processor 240 (e.g., the video information collection and analysis unit 243 of FIG. 2) may apply a weight ratio corresponding to the weight value for the frame number to the reference time, thereby configuring the reference time related to the decoding of each frame of the video (e.g., changing (or maintaining) the reference time).

In an embodiment, in operation 1220, the processor 240 may obtain information related to the usage state of a codec. In operation 1225, the processor 240 may obtain maximum performance information about the codec (e.g., the maximum performance fps of the codec according to the resolution of the video). In operation 1230, the processor 240 may calculate and store the available maximum performance of the codec, based on the obtained information related to the usage state of the codec and the obtained maximum performance information about the codec.

In an embodiment, the maximum performance fps of the codec may vary depending on the usage state of the codec used in the electronic device 101. For example, when no application uses the codec in the electronic device 101, the codec may exhibit the maximum performance. However, when at least one application uses the codec, the processor 240 may decode the video with a performance excluding the performance of the codec being used by the at least one application from the maximum performance of the codec.

In an embodiment, although not shown, a middleware (e.g., the middleware 144 of FIG. 1) of the electronic device 101 may include a resource management unit. The processor 240 may receive the information related to the usage state of the codec from the resource management unit. The processor 240 may calculate the available maximum performance of the codec, based on the maximum performance information about the codec and the information related to the usage state of the codec received from the resource management unit. For example, the available maximum performance of the codec may be calculated based on Equation 1 illustrated below.

$$[\text{Equation 1}]$$
$$fps_{possible} = \frac{(w_{current} \times h_{current} \times fps_{max}) - \sum_{i=0}^{n}(w_i \times h_i \times fps_i)}{w_{current} \times h_{current}}$$

($w_{current} \times h_{current}$: Resolution of video, $fps_{max}$: Maximum performance fps of codec according to resolution of video, ($w_{current} \times h_{current} \times fps_{max}$): Maximum performance value of codec, $\sum_{i=0}^{n}(w_i \times h_i \times fps_i)$ : Sum of performances of currently used codecs, n: Number of codecs used, fps: fps of another video in use)

In an example, assuming that the resolution of the video is "1920 x 1080," maximum performance with which the codec is capable of processing the video with the resolution of "1920 x 1080" is 240 fps, and the performance of the codec being used in the electronic device 101 is, for example, "1920 x 1080 x 30 fps," "1280 x 720 x 60 fps," and "3840 x 2160 x 24 fps," the available maximum performance of the codec may be calculated to be approximately 87.33 fps according to Equation 2 illustrated below. The maximum performance with which the codec is capable of processing the video with the resolution of "1920 x 1080" is 240 fps, but the available maximum performance of the codec calculated according to Equation 2 may be calculated to be approximately 87.33 fps. The processor 240 may store the calculated available maximum performance of the codec, which is approximately 87.33 fps.

$$[\text{Equation 2}]$$
$$\frac{[(1920 \times 1080 \times 240) - \{(1920 \times 1080 \times 30) + (1280 \times 720 \times 60) + (3840 \times 2160 \times 24)\}]}{(1920 \times 1080)}$$
$$= 87.333333$$

The disclosure is not limited thereto, and when the information related to the usage state of the codec is not obtained (e.g., when there is no application being executed and thus the codec is able to process the video with the maximum performance), operation 1220 and operation 1230 may be omitted. For example, the processor 240 may use the maximum performance information about the codec obtained in operation 1225 to calculate time required for decoding, which will be described later.

In an embodiment, the processor 240 may obtain the read speed of the video in operation 1235, and may store the obtained read speed of the video in operation 1240. For example, as illustrated in FIG. 8, when playing a streaming video, the processor 240 may obtain the read speed of the video corresponding to a network transmission speed based on a network condition from a communication circuit (e.g., the communication circuit 210 of FIG. 2). The disclosure is not limited thereto, and when playing the video stored in an external storage device (e.g., an SD card), the processor 240 may obtain the read speed of the video from the external storage device. The processor 240 may store the read speed (e.g., the network transmission speed) of the video obtained from the communication circuit 210 or the read speed of the video obtained from the external storage device.

In an embodiment, in operation 1245, the processor 240 may identify the number of frames from the first time point to a second time point indicating a previous sync frame, based on a table related to frames of the video. For example, the table related to the frames of the video may include the second table illustrated in reference numeral 550 of FIG. 5 or the second table illustrated in FIG. 6. The processor 240 may identify the number of frames from the first time point to the second time point indicating the previous sync frame, based on the table (e.g., the second table) related to the frames of the video.

In an embodiment, although not shown, when there is no information about the number of frames from the first time point to the second time point indicating the previous sync frame in the table (e.g., the second table) related to the frames of the video, the processor 240 may determine that it is impossible to decode the frames from the first time point to the second time point indicating the previous sync frame, and may terminate a corresponding operation (e.g., the operations of FIG. 12). The disclosure is not limited thereto, and the processor 240 may play a video of a sync frame adjacent to a frame corresponding to the first time point of which the playback is requested.

In an embodiment, in operation 1250, the processor 240 may calculate the time required for decoding, based on the available maximum performance of the codec, the read speed of the video, and the number of frames from the first time point to the second time point indicating the previous sync frame. When identifying that the calculated time required for decoding is within the reference time configured based on the weighting information, the processor 240 may decode the video in operation 1255.

Although not shown, the performance and/or usage rate of the processor 240 may be further included as a condition for calculating the time required to decode the frames from the first time point to the second time point according to various embodiments. For example, since the performance and/or usage rate of the processor 240 may affect the time required for decoding, the processor 240 may configure the time required for decoding to exceed or fall below the reference time in view of the performance (e.g., clock speed and/or number of cores) and/or usage rate of the processor 240.

The disclosure is not limited thereto, and the condition for calculating the time required to decode the frames from the first time point to the second time point may further include information about the remaining level of a battery (e.g., the battery 189 of FIG. 1), information about whether a power saving mode operates, information about the temperature of the electronic device 101 (or temperature of the battery 189), and/or the concentration level of a user.

For example, when the first time point is not a sync frame, decoding the frames from the first time point to the second time point indicating the previous sync frame, in which the number of frames is greater than decoding of a synch frame when the first time point is the sync frame, may consume more power of the battery 189. Thus, when the remaining level of the battery 189 is below a specified level or the electronic device 101 operates in the power saving mode, the processor 240 may configured the time required for decoding to exceed the reference time in order to restrict decoding of the frames from the first time point to the second time point indicating the previous sync frame.

In another example, since decoding the frames from the first time point to the second time point indicating the previous sync frame may affect heat generation of the electronic device 101 (or the battery 189), the temperature of the electronic device 101 (or the temperature of the battery 189) may increase. Thus, when the temperature of the electronic device 101 (or the temperature of the battery 189) exceeds a specified temperature value, the processor 240 may configure the time required for decoding to exceed the reference time in order to restrict the decoding of the frames from the first time point to the second time point indicating the previous sync frame. The disclosure is not limited thereto, and when the temperature of the electronic device 101 (or the temperature of the battery 189) exceeds the specified temperature value, the processor 240 may determine that it is impossible to decode the frames from the first time point to the second time point indicating the previous sync frame, and may terminate a corresponding operation.

In still another example, when decoding the frames from the first time point to the second time point indicating the previous sync frame, the concentration level of the user may be used as weighting information. For example, when determining that the user is staring at a display (e.g., the display 231 of FIG. 2) that is displaying a specific frame of a video and/or when detecting a touch interaction (e.g., a gesture of enlarging a screen or a gesture of tracking a specific object within the video) while displaying the specific frame of the video, the processor 240 may recognize that the concentration level of the user is high, and may configure a weight value for the specific frame of the video to be higher than a specified weight value. In another example, when determining that the user is not staring at the display 231 that is displaying a specific frame of a video and/or when detecting a touch interaction of skipping the specific frame of the video, the processor 240 may recognize that the concentration level of the user is low, and may configure a weight value for the specific frame of the video to be lower than a specified weight value.

In FIG. 3 to FIG. 12 according to various embodiments, the electronic device 101 may accurately calculate time required for decoding to output a video of a specific time point in further consideration of not only information related to the video (e.g., the resolution and fps of the video and/or maximum performance fps of a codec per resolution) but also the number of frames required for decoding based on a table related to frames of the video, information related to the usage state of the codec, the read speed of the video, and/or weighting information. Accordingly, the electronic device 101 may quickly determine whether to perform decoding to output the video of specific time point, thus reducing user waiting time.

A video processing method of an electronic device 101 according to an embodiment of the disclosure may include detecting an input to request playback of a first time point of a video while playing the video. The video processing method of the electronic device 101 according to an embodiment of the disclosure may include identifying a number of frames from the first time point of the video to a second time point indicating a previous sync frame, based on a table related to frames of the video. The video processing method of the electronic device 101 according to an embodiment of the disclosure may include calculating time required for decoding, based on maximum performance of a codec according to resolution of the video and the number of frames from the first time point of the video to the second time point indicating the previous sync frame. The video processing method of the electronic device 101 according to an embodiment of the disclosure may include decoding the video, based on the maximum performance of the codec according to the resolution of the video and the frames from the first time point to the second time point when the calculated time required for decoding is identified as being within a reference time.

In an embodiment, the reference time may be time for determining whether to perform decoding based on the frames from the first time point of the video to the second time point indicating the previous sync frame when the input to request the playback of the first time point of the video is detected.

In an embodiment, the reference time may be time obtained from an application that plays the video or time configured by default.

The video processing method of the electronic device 101 according to an embodiment of the disclosure may include identifying whether there is the table related to the frames of the video while playing the video. The video processing method of the electronic device 101 according to an embodiment of the disclosure may include obtaining the table related to the frames of the video when there is the table related to the frames of the video.

The video processing method of the electronic device 101 according to an embodiment of the disclosure may include generating the table related to the frames of the video when there is no table related to the frames of the video. The video processing method of the electronic device 101 according to an embodiment of the disclosure may include sequentially obtaining frame information about each of the frames of the video. The video processing method of the electronic device 101 according to an embodiment of the disclosure may include updating the generated table related to the frames of the video, based on the sequentially obtained frame information about each of the frames.

In an embodiment, the sequentially obtained frame information about each of the frames may include information related to a sync frame and information indicating an interval between the sync frame and a non-sync frame.

The video processing method of the electronic device 101 according to an embodiment of the disclosure may include decoding a sync frame adjacent to the first time point when the calculated time required for decoding is identified as exceeding the reference time.

The calculating of the time required for decoding according to an embodiment may include calculating the time required for decoding in further consideration of fps of the video.

The video processing method of the electronic device 101 according to an embodiment of the disclosure may include obtaining read speed information about the video while playing the video. The video processing method of the electronic device 101 according to an embodiment of the disclosure may include calculating second time required for decoding, based on the obtained read speed information about the video and size of the frames from the first time point to the second time point indicating the previous sync frame. The video processing method of the electronic device 101 according to an embodiment of the disclosure may include decoding the video, based on the maximum performance of the codec according to the resolution of the video and the frames from the first time point to the second time point when the calculated second time required for decoding is identified as being within the reference time.

The video processing method of the electronic device 101 according to an embodiment of the disclosure may include identifying weighting information about the frames of the video while playing the video. The video processing method of the electronic device 101 according to an embodiment of the disclosure may include configuring a second reference time related to decoding of the frames of the video, based on the identified weighting information about the frames of the video.

The video processing method of the electronic device 101 according to an embodiment of the disclosure may include decoding the video, based on the maximum performance of the codec according to the resolution of the video and the frames from the first time point to the second time point when the calculated time required for decoding is identified as being within the second reference time.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g.,

importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., through wires), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device (101) comprising:

   a display (231);
   memory (220) storing instructions; and
   a processor (240),
   wherein the instructions, when executed by the processor (240), cause the electronic device (101) to:

   detect an input to request playback of a first time point of a video while playing the video;
   identify a number of frames from the first time point to a second time point indicating a previous sync frame, based on a table related to frames of the video;
   calculate time required for decoding, based on maximum performance of a codec according to resolution of the video and the identified number of frames; and
   decode the video, based on the maximum performance of the codec according to the resolution of the video and the frames from the first time point to the second time point in case that the calculated time required for decoding is within a reference time.

2. The electronic device of claim 1, wherein the reference time is time for determining whether to perform decoding based on the frames from the first time point to the second time point in case that the input to request the playback of the first time point is detected, and

wherein the reference time is time obtained from an application that plays the video or time configured by default.

3. The electronic device of claim 1 or 2, wherein the instructions, when executed by the processor (240), cause the electronic device (101) to:

identify whether there is the table related to the frames of the video while playing the video; and
obtain the table related to the frames of the video in case that there is the table related to the frames of the video.

4. The electronic device of claim 3, wherein the instructions, when executed by the processor (240), cause the electronic device (101) to:

generate the table related to the frames of the video in case that there is no table related to the frames of the video;
sequentially obtain frame information about each of the frames of the video; and
update the generated table related to the frames of the video, based on the sequentially obtained frame information about each of the frames, and
wherein the frame information about each of the frames comprises information related to a sync frame and information indicating an interval between the sync frame and a non-sync frame.

5. The electronic device of any of claims 1 to 4, wherein the instructions, when executed by the processor (240), cause the electronic device (101) to:
decode a sync frame adjacent to the first time point in case that the calculated time required for decoding exceeds the reference time.

6. The electronic device of any of claims 1 to 5, wherein the instructions, when executed by the processor (240), cause the electronic device (101) to:
calculate the time required for decoding in further consideration of fps of the video.

7. The electronic device of any of claims 1 to 6, wherein the instructions, when executed by the processor (240), cause the electronic device (101) to:

obtain read speed information about the video while playing the video;
calculate second time required for decoding, based on the obtained read speed information about the video and size of the frames from the first time point to the second time point indicating the previous sync frame; and
decode the video, based on the maximum performance of the codec according to the resolution of the video and the frames from the first time point to the second time point in case that the calculated second time required for decoding is within the reference time.

8. The electronic device of claim 1, wherein the instructions, when executed by the processor (240), cause the electronic device (101) to:

identify weighting information about the frames of the video while playing the video;
configure a second reference time related to decoding of the frames of the video, based on the identified weighting information; and
decode the video, based on the maximum performance of the codec according to the resolution of the video and the frames from the first time point to the second time point in case that the calculated time required for decoding is within the second reference time.

9. A video processing method of an electronic device, the method comprising:

detecting an input to request playback of a first time point of a video while playing the video;
identifying a number of frames from the first time point to a second time point indicating a previous sync frame, based on a table related to frames of the video;
calculating time required for decoding, based on maximum performance of a codec according to resolution of the video and the identified number of frames; and
decoding the video, based on the maximum performance of the codec according to the resolution of the video and the frames from the first time point to the second time point in case that the calculated time required for decoding is

EP 4 727 140 A1

within a reference time.

10. The method of claim 9, wherein the reference time is time for determining whether to perform decoding based on the frames from the first time point to the second time point in case that the input to request the playback of the first time point is detected, and
wherein the reference time is time obtained from an application that plays the video or time configured by default.

11. The method of claim 9 or 10, further comprising:

identifying whether there is the table related to the frames of the video while playing the video;
obtaining the table related to the frames of the video in case that there is the table related to the frames of the video.
generating the table related to the frames of the video in case that there is no table related to the frames of the video;
sequentially obtaining frame information about each of the frames of the video; and
updating the generated table related to the frames of the video, based on the sequentially obtained frame information about each of the frames, and
wherein the frame information about each of the frames comprises information related to a sync frame and information indicating an interval between the sync frame and a non-sync frame.

12. The method of any of claims 9 to 11, further comprising
decoding a sync frame adjacent to the first time point in case that the calculated time required for decoding exceeds the reference time.

13. The method of any one of claims 9 to 12, wherein the calculating of the time required for decoding comprises calculating the time required for decoding in further consideration of fps of the video.

14. The method of any of claims 9 to 13, further comprising:

obtaining read speed information about the video while playing the video;
calculating second time required for decoding, based on the obtained read speed information about the video and size of the frames from the first time point to the second time point indicating the previous sync frame; and
decoding the video, based on the maximum performance of the codec according to the resolution of the video and the frames from the first time point to the second time point in case that the calculated second time required for decoding is within the reference time.

15. The method of claim 9, further comprising:

identifying weighting information about the frames of the video while playing the video;
configuring a second reference time related to decoding of the frames of the video, based on the identified weighting information; and
decoding the video, based on the maximum performance of the codec according to the resolution of the video and the frames from the first time point to the second time point in case that the calculated time required for decoding is within the second reference time.

# FIG. 1

**ELECTRONIC DEVICE** 101

**INPUT MODULE** 150

**SOUND OUTPUT MODULE** 155

**BATTERY** 189

**POWER MANAGEMENT MODULE** 188

**DISPLAY MODULE** 160

**MEMORY** 130
- **VOLATILE MEMORY** 132
- **NON-VOLATILE MEMORY** 134
  - **INTERNAL MEMORY** 136
  - **EXTERNAL MEMORY** 138

**PROCESSOR** 120
- **MAIN PROCESSOR** 121
- **AUXILIARY PROCESSOR** 123

**COMMUNICATION MODULE** 190
- **WIRELESS COMMUNICATION MODULE** 192
- **WIRED COMMUNICATION MODULE** 194

**SUBSCRIBER IDENTIFICATION MODULE** 196

**ANTENNA MODULE** 197

**AUDIO MODULE** 170

**HAPTIC MODULE** 179

**SENSOR MODULE** 176

**CAMERA MODULE** 180

**INTERFACE** 177

**CONNECTION TERMINAL** 178

**PROGRAM** 140
- **APPLICATIONS** 146
- **MIDDLEWARE** 144
- **OPERATING SYSTEM** 142

100

**SECOND NETWORK** 199

**ELECTRONIC DEVICE** 104

**FIRST NETWORK** 198

**ELECTRONIC DEVICE** 102

**SERVER** 108

EP 4 727 140 A1

# FIG. 2

<u>101</u>

210
COMMUNICATION CIRCUIT

240
PROCESSOR

VIDEO PLAYBACK UNIT — 241

VIDEO INFORMATION COLLECTION AND ANALYSIS UNIT — 243

DEMUXER — 245

230
TOUCHSCREEN DISPLAY

DISPLAY — 231

TOUCH PANEL — 233

220
MEMORY

# FIG. 3

START

**305** PLAY VIDEO

**310** CONFIGURE REFERENCE TIME RELATED TO REQUIRED TIME ACCORDING TO CHANGE OF PLAYBACK POINT OF VIDEO

**315** DOES FIRST TABLE RELATED TO FRAMES OF VIDEO EXIST IN DEMUXER

NO

YES

**320** RECEIVE FIRST TABLE FROM DEMUXER AND UPDATE SECOND TABLE

**325** REQUEST INFORMATION ABOUT FRAMES OF VIDEO FROM DEMUXER

**330** UPDATE SECOND TABLE, BASED ON FRAME INFORMATION OBTAINED FROM DEMUXER

**335** IS FRAME OBTAINED FROM DEMUXER LAST FRAME?

NO

YES

END

# FIG. 4

410

| Sync frame |
| :---: |
| . . . |
| True |
| False |
| False |
| False |
| True |
| False |
| False |
| . . . |
| True |

420

| Timestamp |
| :---: |
| . . . |
| 1000000 |
| 1033000 |
| 1066000 |
| 1100000 |
| 1133000 |
| 1166000 |
| 1200000 |
| . . . |
| EOS |

# FIG. 5

| FIRST TABLE |
|---|
| ... |
| -1000 | ~511 |
| 1033 | ~512 |
| 1066 | ~513 |
| 1100 | ~514 |
| -1133 | ~515 |
| 1166 | ~516 |
| 1200 | ~517 |
| ... | ... |
| EOS | ~519 |

(510)

| SECOND TABLE | |
|---|---|
| ... | ... |
| 1000 | 0 | ~551 |
| 1033 | 1 | ~552 |
| 1066 | 2 | ~553 |
| 1100 | 3 | ~554 |
| 1133 | 0 | ~555 |
| 1166 | 1 | ~556 |
| 1200 | 2 | ~557 |
| ... | ... | ... |
| EOS | 0 | ~559 |

(550)

# FIG. 6

**245** DEMUXER
**243** VIDEO INFORMATION COLLECTION AND ANALYSIS UNIT

FIRST TABLE

SECOND TABLE

**613**

| Sync frame | ⋯ | Timestamp |
|---|---|---|
| True | ⋯ | 1000000 |

**611** REQUEST FIRST FRAME INFORMATION

FIRST FRAME INFORMATION

**617** EXTRACT AND UPDATE (True, 1000000)

**619**

| Timestamp [ms] | Distance |
|---|---|
| ... | ... |
| 1000 | 0 |

**623**

| Sync frame | ⋯ | Timestamp |
|---|---|---|
| False | ⋯ | 1033000 |

**621** **613** REQUEST SECOND FRAME INFORMATION

SECOND FRAME INFORMATION

**627** EXTRACT AND UPDATE (False, 1033000)

**633**

| Sync frame | ⋯ | Timestamp |
|---|---|---|
| False | ⋯ | 1066000 |

**631** **623** REQUEST THIRD FRAME INFORMATION

THIRD FRAME INFORMATION

**629**

| Timestamp [ms] | Distance |
|---|---|
| ... | ... |
| 1000 | 0 |
| 1033 | 1 |

**637** EXTRACT AND UPDATE (False, 1066000)

**633**

**643**

| Sync frame | ⋯ | Timestamp |
|---|---|---|
| False | ⋯ | 1100000 |

**641** **633** REQUEST FOURTH FRAME INFORMATION

FOURTH FRAME INFORMATION

**639**

| Timestamp [ms] | Distance |
|---|---|
| ... | ... |
| 1000 | 0 |
| 1033 | 1 |
| 1066 | 2 |

**643**

**647** EXTRACT AND UPDATE (False, 1100000)

**653**

| Sync frame | ⋯ | Timestamp |
|---|---|---|
| True | ⋯ | 1133000 |

**651** REQUEST FIFTH FRAME INFORMATION

FIFTH FRAME INFORMATION

**653**

**649**

| Timestamp [ms] | Distance |
|---|---|
| ... | ... |
| 1000 | 0 |
| 1033 | 1 |
| 1066 | 2 |
| 1100 | 3 |

**657** EXTRACT AND UPDATE (True, 1133000)

**659**

| Timestamp [ms] | Distance |
|---|---|
| ... | ... |
| 1000 | 0 |
| 1033 | 1 |
| 1066 | 2 |
| 1100 | 3 |
| 1133 | 0 |

# FIG. 7

START

DETECT INPUT TO REQUEST PLAYBACK OF FIRST TIME POINT OF VIDEO WHILE PLAYING VIDEO ~705

IDENTIFY NUMBER OF FRAMES FROM FIRST TIME POINT TO SECOND TIME POINT INDICATING PREVIOUS SYNC FRAME, BASED ON TABLE RELATED TO FRAMES OF VIDEO ~710

CALCULATE TIME REQUIRED FOR DECODING, BASED ON MAXIMUM PERFORMANCE OF CODEC ACCORDING TO RESOLUTION OF VIDEO AND NUMBER OF IDENTIFIED FRAMES ~715

DECODE VIDEO, BASED ON MAXIMUM PERFORMANCE OF CODEC ACCORDING TO RESOLUTION OF VIDEO AND NUMBER OF FRAMES FROM FIRST TIME POINT TO SECOND TIME POINT WHEN IDENTIFYING THAT CALCULATED TIME REQUIRED FOR DECODING IS WITHIN REFERENCE TIME ~720

END

# FIG. 8

START

DETECT INPUT TO REQUEST PLAYBACK OF FIRST TIME POINT OF VIDEO WHILE PLAYING VIDEO ～805

OBTAIN READ SPEED OF VIDEO ～810

IDENTIFY SIZE OF FRAMES FROM FIRST TIME POINT TO SECOND TIME POINT INDICATING PREVIOUS SYNC FRAME, BASED ON TABLE RELATED TO FRAMES OF VIDEO ～815

CALCULATE TIME REQUIRED FOR DECODING, BASED ON OBTAINED READ SPEED AND IDENTIFIED SIZE OF FRAMES ～820

DECODE VIDEO, BASED ON MAXIMUM PERFORMANCE OF CODEC ACCORDING TO RESOLUTION OF VIDEO AND SIZE OF FRAMES FROM FIRST TIME POINT TO SECOND TIME POINT INDICATING PREVIOUS SYNC FRAME WHEN IDENTIFYING THAT CALCULATED TIME REQUIRED FOR DECODING IS WITHIN REFERENCE TIME ～825

END

EP 4 727 140 A1

FIG. 9

# FIG. 10

START

IDENTIFY WEIGHTING INFORMATION ABOUT FRAMES OF VIDEO ～1005

CONFIGURE REFERENCE TIME REQUIRED FOR DECODING OF EACH FRAME OF VIDEO, BASED ON IDENTIFIED WEIGHTING INFORMATION ～1010

END

# FIG. 11

START

DETECT INPUT TO REQUEST PLAYBACK OF FIRST TIME POINT
OF VIDEO WHILE PLAYING VIDEO — 1105

IDENTIFY NUMBER OF FRAMES FROM FIRST TIME POINT TO SECOND
TIME POINT INDICATING PREVIOUS SYNC FRAME, BASED ON TABLE
RELATED TO FRAMES OF VIDEO — 1110

CALCULATE TIME REQUIRED FOR DECODING, BASED ON MAXIMUM
PERFORMANCE OF CODEC ACCORDING TO RESOLUTION OF VIDEO AND
NUMBER OF IDENTIFIED FRAMES — 1115

DECODE VIDEO, BASED ON MAXIMUM PERFORMANCE OF CODEC
ACCORDING TO RESOLUTION OF VIDEO AND NUMBER OF FRAMES FROM
FIRST TIME POINT TO SECOND TIME POINT WHEN IDENTIFYING THAT
CALCULATED TIME REQUIRED FOR DECODING IS WITHIN REFERENCE TIME
CONFIGURED BASED ON WEIGHTING INFORMATION — 1120

END

# FIG. 12

START

↓

DETECT INPUT TO REQUEST PLAYBACK OF FIRST TIME POINT OF — 1205
VIDEO WHILE PLAYING VIDEO

| 1210 | 1220 | 1225 | 1235 | 1245 |
|---|---|---|---|---|
| OBTAIN WEIGHTING INFORMATION ABOUT FRAMES OF VIDEO | OBTAIN INFORMATION RELATED TO USAGE STATE OF CODEC | OBTAIN MAXIMUM PERFORMANCE INFORMATION ABOUT CODEC | OBTAIN READ SPEED OF VIDEO | IDENTIFY FRAMES FROM FIRST TIME POINT TO SECOND TIME POINT INDICATING PREVIOUS SYNC FRAME, BASED ON TABLE RELATED TO FRAMES OF VIDEO |
| 1215 | 1230 | | 1240 | |
| CONFIGURE REFERENCE TIME RELATED TO DECODING OF EACH FRAME OF VIDEO, BASED ON WEIGHTING INFORMATION | CALCULATE AND STORE AVAILABLE MAXIMUM PERFORMANCE OF CODEC | | STORE OBTAINED READ SPEED OF VIDEO | |

↓

DECODE VIDEO, BASED ON AVAILABLE MAXIMUM PERFORMANCE OF — 1250
CODEC, READ SPEED OF VIDEO, AND FRAMES FROM FIRST TIME POINT TO
SECOND TIME POINT INDICATING PREVIOUS SYNC FRAME

↓

DECODE VIDEO WHEN IDENTIFYING THAT CALCULATED TIME REQUIRED FOR DECODING — 1255
IS WITHIN REFERENCE TIME CONFIGURED BASED ON WEIGHTING INFORMATION

↓

END

EP 4 727 140 A1

## INTERNATIONAL SEARCH REPORT

| | International application No. |
|---|---|
| | **PCT/KR2024/006101** |

| A. | CLASSIFICATION OF SUBJECT MATTER |
|---|---|

**H04N 21/4402**(2011.01)i; **H04N 21/472**(2011.01)i; **H04N 21/426**(2011.01)i

According to International Patent Classification (IPC) or to both national classification and IPC

| B. | FIELDS SEARCHED |
|---|---|

Minimum documentation searched (classification system followed by classification symbols)

H04N 21/4402(2011.01); G06F 3/048(2006.01); G09G 5/00(2006.01); H04M 1/00(2006.01); H04N 21/4363(2011.01); H04N 21/443(2011.01); H04N 5/50(2006.01); H04N 7/015(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 영상(video), 시점(time point), 재생(replay), 탐색(seek), 코덱(codec)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2022-0015802 A (SAMSUNG ELECTRONICS CO., LTD.) 08 February 2022 (2022-02-08)<br>See paragraphs [0041]-[0058]; claim 1; and figure 2. | 1-15 |
| Y | KR 10-2013-0085703 A (SAMSUNG ELECTRONICS CO., LTD.) 30 July 2013 (2013-07-30)<br>See paragraphs [0036]-[0045]; and figure 2. | 1-15 |
| A | KR 10-2011-0025514 A (LG ELECTRONICS INC.) 10 March 2011 (2011-03-10)<br>See paragraphs [0081]-[0087]; and figure 6. | 1-15 |
| A | KR 10-2018-0086112 A (HANWHA AEROSPACE CO., LTD.) 30 July 2018 (2018-07-30)<br>See claims 1-13. | 1-15 |
| A | JP 2022-531738 A (HUAWEI TECH. CO., LTD.) 08 July 2022 (2022-07-08)<br>See claims 1-9. | 1-15 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 August 2024** | **19 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/006101**

| Patent document cited in search report | | | Publication date (day/month/year) | Patent family member(s) | | | Publication date (day/month/year) |
|---|---|---|---|---|---|---|---|
| KR | 10-2022-0015802 | A | 08 February 2022 | EP | 4178211 | A1 | 10 May 2023 |
| | | | | US | 2023-0178116 | A1 | 08 June 2023 |
| | | | | WO | 2022-025633 | A1 | 03 February 2022 |
| KR | 10-2013-0085703 | A | 30 July 2013 | CN | 103220580 | A | 24 July 2013 |
| | | | | EP | 2618249 | A2 | 24 July 2013 |
| | | | | EP | 2618249 | B1 | 04 March 2020 |
| | | | | JP | 2013-149246 | A | 01 August 2013 |
| | | | | JP | 5664883 | B2 | 04 February 2015 |
| | | | | KR | 10-1954794 | B1 | 31 May 2019 |
| | | | | US | 2013-0191747 | A1 | 25 July 2013 |
| | | | | US | 9459753 | B2 | 04 October 2016 |
| | | | | WO | 2013-109052 | A1 | 25 July 2013 |
| KR | 10-2011-0025514 | A | 10 March 2011 | None | | | |
| KR | 10-2018-0086112 | A | 30 July 2018 | KR | 10-1931514 | B1 | 21 December 2018 |
| | | | | KR | 10-2018-0086113 | A | 30 July 2018 |
| JP | 2022-531738 | A | 08 July 2022 | CN | 110166820 | A | 23 August 2019 |
| | | | | CN | 110166820 | B | 09 April 2021 |
| | | | | EP | 3955583 | A1 | 16 February 2022 |
| | | | | JP | 7324311 | B2 | 09 August 2023 |
| | | | | US | 2022-0224985 | A1 | 14 July 2022 |
| | | | | WO | 2020-228645 | A1 | 19 November 2020 |

Form PCT/ISA/210 (patent family annex) (July 2022)